# EUROPEAN PATENT APPLICATION

(11) **EP 4 568 359 A1**
(43) Date of publication of application: **11.06.2025**
(21) Application number: 23850400.5
(22) Date of filing: 01.08.2023
(51) Int. Cl.: H04W 52/02, H04W 76/28, H04W 72/23

(54) **METHOD, USER EQUIPMENT, PROCESSING DEVICE, STORAGE MEDIUM, AND COMPUTER PROGRAM FOR RECEIVING DOWNLINK CHANNEL, AND METHOD AND BASE STATION FOR TRANSMITTING DOWNLINK CHANNEL**

(30) Priority: 02.08.2022 KR 20220096118; 04.11.2022 KR 20220146360
(71) Applicant: LG Electronics Inc., Yeongdeungpo-gu Seoul 07336 (KR)
(72) Inventor: MYUNG, Sechang, Seoul 06772 (KR); KIM, Seonwook, Seoul 06772 (KR); LEE, Youngdae, Seoul 06772 (KR); KIM, Jaehyung, Seoul 06772 (KR); YANG, Suckchel, Seoul 06772 (KR); HWANG, Seunggye, Seoul 06772 (KR)
(74) Representative: Frenkel, Matthias Alexander
(86) International application number: PCT/KR2023/011246
(87) International publication number: WO 2024/029899

(57) **Abstract**

A UE may: receive a first discontinuous reception (DRX) configuration; receive a monitoring window configuration including configurations for one or more common search spaces (CSSs); perform first physical downlink control channel (PDCCH) monitoring at a monitoring occasion (MO) within a first PDCCH monitoring window on the basis of the monitoring window configuration; on the basis of detecting first group common downlink control information (GC-DCI) including a DRX command for the first DRX configuration on at least one CSS among the one or more CSSs in the first PDCCH monitoring window, stop the active time of a first DRX cycle that is based on the first DRX configuration; and start a second DRX cycle that is based on the first DRX configuration after a predetermined time.

## Description

### TECHNICAL FIELD

The present disclosure relates to a wireless communication system.

### BACKGROUND

A variety of technologies, such as machine-to-machine (M2M) communication, machine type communication (MTC), and a variety of devices demanding high data throughput, such as smartphones and tablet personal computers (PCs), have emerged and spread. Accordingly, the volume of data throughput demanded to be processed in a cellular network has rapidly increased. In order to satisfy such rapidly increasing data throughput, carrier aggregation technology or cognitive radio technology for efficiently employing more frequency bands and multiple input multiple output (MIMO) technology or multi-base station (BS) cooperation technology for raising data capacity transmitted on limited frequency resources have been developed.

As more and more communication devices have required greater communication capacity, there has been a need for enhanced mobile broadband (eMBB) communication relative to legacy radio access technology (RAT). In addition, massive machine type communication (mMTC) for providing various services at anytime and anywhere by connecting a plurality of devices and objects to each other is one main issue to be considered in next-generation communication.

Communication system design considering services/user equipment (UEs) sensitive to reliability and latency is also under discussion. The introduction of next-generation RAT is being discussed in consideration of eMBB communication, mMTC, ultra-reliable and low-latency communication (URLLC), and the like.

### DISCLOSURE

### Technical Problem

The present disclosure is to provide energy saving methods and/or procedures for a base station (BS) and a user equipment (UE).

The present disclosure is to provide methods and/or procedures for a BS to simultaneously issue a discontinuous reception (DRX) command to a plurality of UEs.

The present disclosure is to provide methods and/or procedures for operating a BS and/or a UE when a DRX command is indicated via group-common downlink control information (DCI) and/or group-command medium access control element (MAC CE).

The objects to be achieved with the present disclosure are not limited to what has been particularly described hereinabove and other objects not described herein will be more clearly understood by persons skilled in the art from the following detailed description.

### Technical Solution

According to an aspect of the present disclosure, a method for a user equipment (UE) to receive a downlink (DL) channel in a wireless communication system is provided. The method includes receiving a first discontinuous reception (DRX) configuration, receiving a monitoring window configuration including a configuration for one or more common search spaces (CSSs), based on the monitoring window configuration, performing first physical downlink control channel (PDCCH) monitoring in a monitoring occasion (MO) within a first PDCCH monitoring window, based on detection of first group common downlink control information (GC-DCI) including a DRX command for the first DRX configuration on at least one CSS from among the one or more CSSs within the first PDCCH monitoring window, stopping an active time of a first cycle based on the first DRX configuration, and starting a second DRX cycle based on the first DRX configuration after a predetermined time.

According to another aspect of the present disclosure, a user equipment (UE) for receiving a downlink (DL) channel in a wireless communication system is provided. The UE includes at least one transceiver, at least one processor, and at least one computer memory operably connected to the at least one processor and storing instructions that, when executed, cause the at least one processor to perform operations. The operations include receiving a first discontinuous reception (DRX) configuration, receiving a monitoring window configuration including a configuration for one or more common search spaces (CSSs), based on the monitoring window configuration, performing first physical downlink control channel (PDCCH) monitoring in a monitoring occasion (MO) within a first PDCCH monitoring window, based on detection of first group common downlink control information (GC-DCI) including a DRX command for the first DRX configuration on at least one CSS from among the one or more CSSs within the first PDCCH monitoring window, stopping an active time of a first cycle based on the first DRX configuration, and starting a second DRX cycle based on the first DRX configuration after a predetermined time.

According to another aspect of the present disclosure, a processing device is provided. The processing device includes at least one transceiver, at least one processor, and at least one computer memory operably connected to the at least one processor and storing instructions that, when executed, cause the at least one processor to perform operations. The operations include receiving a first discontinuous reception (DRX) configuration, receiving a monitoring window configuration including a configuration for one or more common search spaces (CSSs), based on the monitoring window configuration, performing first physical downlink control channel (PDCCH) monitoring in a monitoring occasion (MO) within a first PDCCH monitoring window, based on detection of first group common downlink control information (GC-DCI) including a DRX command for the first DRX configuration on at least one CSS from among the one or more CSSs within the first PDCCH monitoring window, stopping an active time of a first cycle based on the first DRX configuration, and starting a second DRX cycle based on the first DRX configuration after a predetermined time.

According to another aspect of the present disclosure, a computer-readable storage medium is provided. The computer-readable storage non-transitory medium stores at least one computer program including instructions that, when executed by at least one processor, cause the at least one processor to perform operations for a user equipment (UE). The operations include receiving a first discontinuous reception (DRX) configuration, receiving a monitoring window configuration including a configuration for one or more common search spaces (CSSs), based on the monitoring window configuration, performing first physical downlink control channel (PDCCH) monitoring in a monitoring occasion (MO) within a first PDCCH monitoring window, based on detection of first group common downlink control information (GC-DCI) including a DRX command for the first DRX configuration on at least one CSS from among the one or more CSSs within the first PDCCH monitoring window, stopping an active time of a first cycle based on the first DRX configuration, and starting a second DRX cycle based on the first DRX configuration after a predetermined time.

According to another aspect of the present disclosure, a method of transmitting a downlink (DL) channel to a user equipment (UE) by a base station (BS) in a wireless communication system is provided. The method includes transmitting a first discontinuous reception (DRX) configuration, transmitting a monitoring window configuration including a configuration for one or more common search spaces (CSSs), based on the monitoring window configuration, performing first physical downlink control channel (PDCCH) transmission in a monitoring occasion (MO) within a first PDCCH monitoring window, based on detection of first group common downlink control information (GC-DCI) including a DRX command for the first DRX configuration on at least one CSS from among the one or more CSSs within the first PDCCH monitoring window, stopping an active time of a first cycle based on the first DRX configuration, and starting a second DRX cycle based on the first DRX configuration after a predetermined time.

According to another aspect of the present disclosure, a base station (BS) for transmitting a downlink (DL) channel to a user equipment (UE) in a wireless communication system is provided. The BS includes at least one transceiver, at least one processor, and at least one computer memory operably connected to the at least one processor and storing instructions that, when executed, cause the at least one processor to perform operations. The operations include transmitting a first discontinuous reception (DRX) configuration, transmitting a monitoring window configuration including a configuration for one or more common search spaces (CSSs), based on the monitoring window configuration, performing first physical downlink control channel (PDCCH) transmission in a monitoring occasion (MO) within a first PDCCH monitoring window, based on detection of first group common downlink control information (GC-DCI) including a DRX command for the first DRX configuration on at least one CSS from among the one or more CSSs within the first PDCCH monitoring window, stopping an active time of a first cycle based on the first DRX configuration, and starting a second DRX cycle based on the first DRX configuration after a predetermined time.

In each implementation of the present disclosure, the operations may include performing second PDCCH monitoring in an MO within a second PDCCH monitoring window based on the monitoring window configuration, stopping an active time of the second DRX cycle based on detection of a second GC-DCI including a DRX command for the first DRX configuration on the one or more CSSs within the second PDCCH monitoring window, and continuing to apply the second DRX cycle based on not detecting the second GC-DCI including a DRX command for the first DRX configuration on the one or more CSSs within the second PDCCH monitoring window.

In each implementation of the present disclosure, the operations may include performing second PDCCH monitoring in an MO within a second PDCCH monitoring window based on the monitoring window configuration, stopping an active time of the second DRX cycle based on detection of a second GC-DCI including a DRX command for a first DRX configuration on the one or more CSSs within the second PDCCH monitoring window, and starting a predetermined default DRX cycle based on not detecting the second GC-DCI including a DRX command for the first DRX configuration on the one or more CSSs within the second PDCCH monitoring window.

In each implementation of the present disclosure, the first GC-DCI may include information about a predetermined time.

Each implementation of the present disclosure may further include receiving a higher layer signal including information about a redetermined time.

In each implementation of the present disclosure, the first GC-DCI may be detected based on a radio network temporary identity (RNTI) for the DRX command.

In each implementation of the present disclosure the first DRX configuration may further include a configuration for a short DRX cycle, and the second DRX cycle may be a long DRX cycle.

In each implementation of the present disclosure, based on the first DRX configuration further including a configuration for a short DRX cycle, the operations may include receiving a PDCCH during an active time of the second DRX cycle, and starting the short DRX cycle after applying the second DRX cycle N times after receiving the PDCCH, and in this case, N may be a predetermined natural number greater than 1.

In each implementation of the present disclosure, the operation may include starting the short DRX cycle based on receiving the PDCCH M times during applying the second DRX cycle N times, and in this case, M may be a predetermined natural number greater than 1.

In each implementation of the present disclosure, the method may include receiving a second DRX configuration including information about a second DRX period different from a first DRX period according to the first DRX configuration, and in this case, the second DRX cycle may be formed by a combination of the first DRX period and the second DRX period.

The foregoing solutions are merely a part of the examples of the present disclosure and various examples into which the technical features of the present disclosure are incorporated may be derived and understood by persons skilled in the art from the following detailed description.

### Advantageous Effects

According to implementation(s) of the present disclosure, methods and/or procedures for energy saving of a base station (BS) and a user equipment (UE) may be provided.

According to implementation(s) of the present disclosure, methods and/or procedures for a BS to simultaneously issue a discontinuous reception (DRX) command to a plurality of UEs may be provided.

According to implementation(s) of the present disclosure, methods and/or procedures for operating a BS and/or a UE when a DRX command is indicated via group-common downlink control information (DCI) and/or group-command medium access control element (MAC CE) may be provided.

According to implementation(s) of the present disclosure, the power consumption of the BS and the UE may be reduced.

The effects according to the present disclosure are not limited to what has been particularly described hereinabove and other effects not described herein will be more clearly understood by persons skilled in the art related to the present disclosure from the following detailed description.

### BRIEF DESCRIPTION OF THE DRAWINGS

FIG. 1 illustrates an example of a communication system 1 to which implementations of the present disclosure are applied.
FIG. 2 is a block diagram illustrating examples of communication devices capable of performing a method according to the present disclosure.
FIG. 3 illustrates another example of a wireless device capable of performing implementation(s) of the present disclosure.
FIG. 4 illustrates an example of a frame structure used in a 3rd generation partnership project (3GPP)-based wireless communication system.
FIG. 5 illustrates a resource grid of a slot.
FIG. 6 illustrates a network communication process for performing implementation(s) of the present disclosure.
FIG. 7 illustrates a discontinuous reception (DRX) operation applicable to implementation(s) of the present disclosure.
FIG. 8 illustrates a case in which a long DRX cycle and a short DRX cycle are configured.
FIG. 9 illustrates network energy saving (NES) according to the present disclosure.
FIG. 10 illustrates a flow of an operation of a network according to some implementations of the present disclosure.
FIG. 11 illustrates a DL channel reception flow in a UE according to some implementations of the present disclosure.
FIG. 12 illustrates a DL channel transmission flow in a BS according to some implementations of the present disclosure.

### DETAILED DESCRIPTION

Hereinafter, implementations according to the present disclosure will be described in detail with reference to the accompanying drawings. The detailed description, which will be given below with reference to the accompanying drawings, is intended to explain exemplary implementations of the present disclosure, rather than to show the only implementations that may be implemented according to the present disclosure. The following detailed description includes specific details in order to provide a thorough understanding of the present disclosure. However, it will be apparent to those skilled in the art that the present disclosure may be practiced without such specific details.

In some instances, known structures and devices may be omitted or may be shown in block diagram form, focusing on important features of the structures and devices, so as not to obscure the concept of the present disclosure. The same reference numbers will be used throughout the present disclosure to refer to the same or like parts.

A technique, a device, and a system described below may be applied to a variety of wireless multiple access systems. The multiple access systems may include, for example, a code division multiple access (CDMA) system, a frequency division multiple access (FDMA) system, a time division multiple access (TDMA) system, an orthogonal frequency division multiple access (OFDMA) system, a single-carrier frequency division multiple access (SC-FDMA) system, etc. CDMA may be implemented by radio technology such as universal terrestrial radio access (UTRA) or CDMA2000. TDMA may be implemented by radio technology such as global system for mobile communications (GSM), general packet radio service (GPRS), enhanced data rates for GSM evolution (EDGE), etc. OFDMA may be implemented by radio technology such as institute of electrical and electronics engineers (IEEE) 802.11 (Wi-Fi), IEEE 802.16 (WiMAX), IEEE 802.20, evolved-UTRA (E-UTRA), etc. UTRA is part of universal mobile telecommunications system (UMTS) and 3rd generation partnership project (3GPP) long-term evolution (LTE) is part of E-UMTS using E-UTRA. 3GPP LTE adopts OFDMA on downlink (DL) and adopts SC-FDMA on uplink (UL). LTE-advanced (LTE-A) is an evolved version of 3GPP LTE, and 3GPP new radio or new radio access technology (NR) is an evolved version of 3GPP LTE/LTE-A.

For convenience of description, description will be given under the assumption that the present disclosure is applied to LTE and/or new RAT (NR). However, the technical features of the present disclosure are not limited thereto. For example, although the following detailed description is given based on mobile communication systems corresponding to 3GPP LTE/NR systems, the mobile communication systems are applicable to other arbitrary mobile communication systems except for matters that are specific to the 3GPP LTE/NR system.

For terms and techniques that are not described in detail among terms and techniques used in the present disclosure, reference may be made to 3GPP based standard specifications, for example, 3GPP TS 36.211, 3GPP TS 36.212, 3GPP TS 36.213, 3GPP TS 36.321, 3GPP TS 36.300, 3GPP TS 36.331, 3GPP TS 37.213, 3GPP TS 38.211, 3GPP TS 38.212, 3GPP TS 38.213, 3GPP TS 38.214, 3GPP TS 38.300, 3GPP TS 38.321, 3GPP TS 38.331, etc.

In examples of the present disclosure described later, if a device "assumes" something, this may mean that a channel transmission entity transmits a channel in compliance with the corresponding "assumption". This also may mean that a channel reception entity receives or decodes the channel in the form of conforming to the "assumption" on the premise that the channel has been transmitted in compliance with the "assumption".

In the present disclosure, a user equipment (UE) may be fixed or mobile. Each of various devices that transmit and/or receive user data and/or control information by communicating with a base station (BS) may be the UE. The term UE may be referred to as terminal equipment, mobile station (MS), mobile terminal (MT), user terminal (UT), subscriber station (SS), wireless device, personal digital assistant (PDA), wireless modem, handheld device, etc. In the present disclosure, a BS refers to a fixed station that communicates with a UE and/or another BS and exchanges data and control information with a UE and another BS. The term BS may be referred to as advanced base station (ABS), Node-B (NB), evolved Node-B (eNB), base transceiver system (BTS), access point (AP), processing server (PS), etc. Particularly, a BS of a universal terrestrial radio access (UTRAN) is referred to as an NB, a BS of an evolved-UTRAN (E-UTRAN) is referred to as an eNB, and a BS of new radio access technology network is referred to as a gNB. Hereinbelow, for convenience of description, the NB, eNB, or gNB will be referred to as a BS regardless of the type or version of communication technology.

In the present disclosure, a node refers to a fixed point capable of transmitting/receiving a radio signal to/from a UE by communication with the UE. Various types of BSs may be used as nodes regardless of the names thereof. For example, a BS, NB, eNB, pico-cell eNB (PeNB), home eNB (HeNB), relay, repeater, etc. may be a node. Furthermore, a node may not be a BS. For example, a radio remote head (RRH) or a radio remote unit (RRU) may be a node. Generally, the RRH and RRU have power levels lower than that of the BS. Since the RRH or RRU (hereinafter, RRH/RRU) is connected to the BS through a dedicated line such as an optical cable in general, cooperative communication according to the RRH/RRU and the BS may be smoothly performed relative to cooperative communication according to BSs connected through a wireless link. At least one antenna is installed per node. An antenna may refer to a physical antenna port or refer to a virtual antenna or an antenna group. The node may also be called a point.

In the present disclosure, a cell refers to a specific geographical area in which one or more nodes provide communication services. Accordingly, in the present disclosure, communication with a specific cell may mean communication with a BS or a node providing communication services to the specific cell. A DL/UL signal of the specific cell refers to a DL/UL signal from/to the BS or the node providing communication services to the specific cell. A cell providing UL/DL communication services to a UE is especially called a serving cell. Furthermore, channel status/quality of the specific cell refers to channel status/quality of a channel or a communication link generated between the BS or the node providing communication services to the specific cell and the UE. In 3GPP-based communication systems, the UE may measure a DL channel state from a specific node using cell-specific reference signal(s) (CRS(s)) transmitted on a CRS resource and/or channel state information reference signal(s) (CSI-RS(s)) transmitted on a CSI-RS resource, allocated to the specific node by antenna port(s) of the specific node.

A 3GPP-based communication system uses the concept of a cell in order to manage radio resources, and a cell related with the radio resources is distinguished from a cell of a geographic area.

The "cell" of the geographic area may be understood as coverage within which a node may provide services using a carrier, and the "cell" of the radio resources is associated with bandwidth (BW), which is a frequency range configured by the carrier. Since DL coverage, which is a range within which the node is capable of transmitting a valid signal, and UL coverage, which is a range within which the node is capable of receiving the valid signal from the UE, depend upon a carrier carrying the signal, coverage of the node may also be associated with coverage of the "cell" of radio resources used by the node. Accordingly, the term "cell" may be used to indicate service coverage by the node sometimes, radio resources at other times, or a range that a signal using the radio resources may reach with valid strength at other times.

In 3GPP communication standards, the concept of the cell is used in order to manage radio resources. The "cell" associated with the radio resources is defined by a combination of DL resources and UL resources, that is, a combination of a DL component carrier (CC) and a UL CC. The cell may be configured by the DL resources only or by the combination of the DL resources and the UL resources. If carrier aggregation is supported, linkage between a carrier frequency of the DL resources (or DL CC) and a carrier frequency of the UL resources (or UL CC) may be indicated by system information. For example, the combination of the DL resources and the UL resources may be indicated by system information block type 2 (SIB2) linkage. In this case, the carrier frequency may be equal to or different from a center frequency of each cell or CC. When carrier aggregation (CA) is configured, the UE has only one radio resource control (RRC) connection with a network. During RRC connection establishment/re-establishment/handover, one serving cell provides non-access stratum (NAS) mobility information. During RRC connection re-establishment/handover, one serving cell provides security input. This cell is referred to as a primary cell (Pcell). The Pcell refers to a cell operating on a primary frequency on which the UE performs an initial connection establishment procedure or initiates a connection re-establishment procedure. According to UE capability, secondary cells (Scells) may be configured to form a set of serving cells together with the Pcell. The Scell may be configured after completion of RRC connection establishment and used to provide additional radio resources in addition to resources of a specific cell (SpCell). A carrier corresponding to the Pcell on DL is referred to as a downlink primary CC (DL PCC), and a carrier corresponding to the Pcell on UL is referred to as an uplink primary CC (UL PCC). A carrier corresponding to the Scell on DL is referred to as a downlink secondary CC (DL SCC), and a carrier corresponding to the Scell on UL is referred to as an uplink secondary CC (UL SCC).

For dual connectivity (DC) operation, the term primary SCG cell (PSCell) refers a secondary cell group (SCG) cell to which a UE performs random access when performing RRC reconfiguration and synchronization processes.

In a dual connectivity (DC) operation, the term special cell (SpCell) refers to a Pcell of a master cell group (MCG) or a Pcell of a secondary cell group (SCG). The SpCell supports PUCCH transmission and contention-based random access and is always activated. The MCG is a group of service cells associated with a master node (e.g., BS) and includes the SpCell (Pcell) and optionally one or more Scells. For a UE configured with DC, the SCG is a subset of serving cells associated with a secondary node and includes the PSCell and 0 or more Scells. For a UE in RRC_CONNECTED state, that is not configured with CA or DC, only one serving cell including only the Pcell is present. For a UE in RRC_CONNECTED state, that is configured with CA or DC, the term serving cells refers to a set of cells including SpCell(s) and all Scell(s). In DC, two medium access control (MAC) entities, i.e., one MAC entity for the MCG and one MAC entity for the SCG, are configured for the UE.

For a UE in which CA is configured and DC is not configured, a Pcell PUCCH group including a Pcell and 0 or more Scells and a Scell PUCCH group including only Scell(s) may be configured. In the case of an Scell, an Scell (hereinafter referred to as a PUCCH cell) in which a PUCCH related to the corresponding cell may be configured. An Scell that indicates a PUCCH Scell belongs to an Scell PUCCH group, PUCCH transmission of related UCI on the PUCCH Scell is performed, an Scell that does not indicate a PUCCH Scell or indicates a Pcell as a cell for PUCCH transmission belongs to a Pcell PUCCH group, and PUCCH transmission of the related UCI is performed on the Pcell.

In a wireless communication system, the UE receives information on DL from the BS and the UE transmits information on UL to the BS. The information that the BS and UE transmit and/or receive includes data and a variety of control information and there are various physical channels according to types/usage of the information that the UE and the BS transmit and/or receive.

The 3GPP-based communication standards define DL physical channels corresponding to resource elements carrying information originating from a higher layer and DL physical signals corresponding to resource elements which are used by the physical layer but do not carry the information originating from the higher layer. For example, a physical downlink shared channel (PDSCH), a physical broadcast channel (PBCH), a physical multicast channel (PMCH), a physical control format indicator channel (PCFICH), a physical downlink control channel (PDCCH), etc. are defined as the DL physical channels, and a reference signal (RS) and a synchronization signal are defined as the DL physical signals. The RS, which is also referred to as a pilot, represents a signal with a predefined special waveform known to both the BS and the UE. For example, a demodulation reference signal (DMRS), a channel state information RS (CSI-RS), a positioning reference signal (PRS) and etc. are defined as DL RSs. The 3GPP-based communication standards define UL physical channels corresponding to resource elements carrying information originating from the higher layer and UL physical signals corresponding to resource elements which are used by the physical layer but do not carry the information originating from the higher layer. For example, a physical uplink shared channel (PUSCH), a physical uplink control channel (PUCCH), and a physical random access channel (PRACH) are defined as the UL physical channels, and a DMRS for a UL control/data signal, a sounding reference signal (SRS) used for UL channel measurement, etc. are defined.

In the present disclosure, a PDCCH refers to a set of time-frequency resources (e.g., resource elements (REs)) carrying downlink control information (DCI), and a PDSCH refers to a set of time-frequency resources carrying DL data. A PUCCH, a PUSCH, and a PRACH refer to a set of time-frequency resources carrying UCI, a set of time-frequency resources carrying UL data, and a set of time-frequency resources carrying random access signals, respectively. In the following description, "the UE transmits/receives a PUSCH/PUCCH/PRACH" is used as the same meaning that the UE transmits/receives the UCI/UL data/random access signals on or through the PUCCH/PUSCH/PRACH, respectively. In addition, "the BS transmits/receives a PBCH/PDCCH/PDSCH" is used as the same meaning that the BS transmits the broadcast information/DL data/DL control information on or through a PBCH/PDCCH/PDSCH, respectively.

As more and more communication devices have required greater communication capacity, there has been a need for eMBB communication relative to legacy radio access technology (RAT). In addition, massive MTC for providing various services at anytime and anywhere by connecting a plurality of devices and objects to each other is one main issue to be considered in next-generation communication. Further, communication system design considering services/UEs sensitive to reliability and latency is also under discussion. The introduction of next-generation RAT is being discussed in consideration of eMBB communication, massive MTC, ultra-reliable and low-latency communication (URLLC), and the like. Currently, in 3GPP, a study on the next-generation mobile communication systems after EPC is being conducted. In the present disclosure, for convenience, the corresponding technology is referred to a new RAT (NR) or fifth-generation (5G) RAT, and a system using NR or supporting NR is referred to as an NR system.

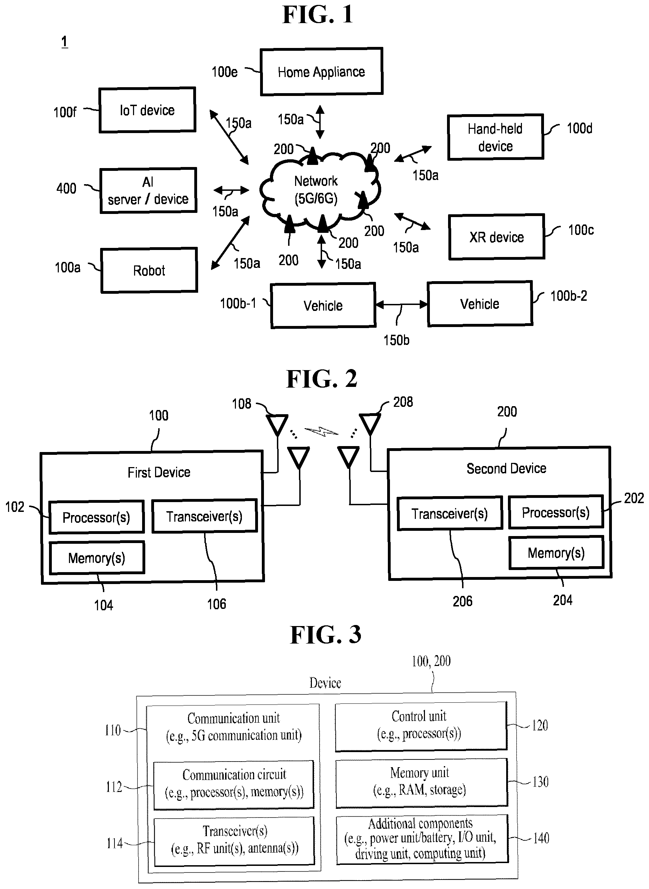

FIG. 1 illustrates an example of a communication system 1 to which implementations of the present disclosure are applied.

Referring to FIG. 1, the communication system 1 applied to the present disclosure includes wireless devices, BSs, and a network. Here, the wireless devices represent devices performing communication using RAT (e.g., 5G NR or LTE (e.g., E-UTRA)) and may be referred to as communication/radio/5G devices. The wireless devices may include, without being limited to, a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 400. For example, the vehicles may include a vehicle having a wireless communication function, an autonomous driving vehicle, and a vehicle capable of performing vehicle-to-vehicle communication. Here, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or smartglasses), and a computer (e.g., a notebook). The home appliance may include a TV, a refrigerator, and a washing machine. The IoT device may include a sensor and a smartmeter. For example, the BSs and the network may also be implemented as wireless devices and a specific wireless device 200a may operate as a BS/network node with respect to another wireless device.

The wireless devices 100a to 100f may be connected to a network 300 via BSs 200. AI technology may be applied to the wireless devices 100a to 100f and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without passing through the BSs/network. For example, the vehicles 100b-1 and 100b-2 may perform direct communication (e.g. vehicle-to-vehicle (V2V)/Vehicle-to-everything (V2X) communication). The IoT device (e.g., a sensor) may perform direct communication with other IoT devices (e.g., sensors) or other wireless devices 100a to 100f.

Wireless communication/connections 150a and 150b may be established between the wireless devices 100a to 100f and the BSs 200 and between the wireless devices 100a to 100f). Here, the wireless communication/connections such as UL/DL communication 150a and sidelink communication 150b (or, device-to-device (D2D) communication) may be established by various RATs (e.g., 5G NR). The wireless devices and the BSs/wireless devices may transmit/receive radio signals to/from each other through the wireless communication/connections 150a and 150b. To this end, at least a part of various configuration information configuring processes, various signal processing processes (e.g., channel encoding/decoding, modulation/demodulation, and resource mapping/demapping), and resource allocating processes, for transmitting/receiving radio signals, may be performed based on the various proposals of the present disclosure.

FIG. 2 is a block diagram illustrating examples of communication devices capable of performing a method according to the present disclosure.

Referring to FIG. 2, a first wireless device 100 and a second wireless device 200 may transmit and/or receive radio signals through a variety of RATs (e.g., LTE and NR). Here, {the first wireless device 100 and the second wireless device 200} may correspond to {the wireless device 100x and the BS 200} and/or {the wireless device 100x and the wireless device 100x} of FIG. 1.

The first wireless device 100 may include one or more processors 102 and one or more memories 104 and additionally further include one or more transceivers 106 and/or one or more antennas 108. The processor(s) 102 may control the memory(s) 104 and/or the transceiver(s) 106 and may be configured to implement the afore-described /proposed functions, procedures, and/or methods. For example, the processor(s) 102 may process information within the memory(s) 104 to generate first information/signals and then transmit radio signals including the first information/signals through the transceiver(s) 106. The processor(s) 102 may receive radio signals including second information/signals through the transceiver(s) 106 and then store information obtained by processing the second information/signals in the memory(s) 104. The memory(s) 104 may be connected to the processor(s) 102 and may store a variety of information related to operations of the processor(s) 102. For example, the memory(s) 104 may perform a part or all of processes controlled by the processor(s) 102 or store software code including instructions for performing the afore-described/proposed procedures and/or methods. Here, the processor(s) 102 and the memory(s) 104 may be a part of a communication modem/circuit/chip designed to implement RAT (e.g., LTE or NR). The transceiver(s) 106 may be connected to the processor(s) 102 and transmit and/or receive radio signals through one or more antennas 108. Each of the transceiver(s) 106 may include a transmitter and/or a receiver. The transceiver(s) 106 is used interchangeably with radio frequency (RF) unit(s). In the present disclosure, the wireless device may represent the communication modem/circuit/chip.

The second wireless device 200 may include one or more processors 202 and one or more memories 204 and additionally further include one or more transceivers 206 and/or one or more antennas 208. The processor(s) 202 may control the memory(s) 204 and/or the transceiver(s) 206 and may be configured to implement the afore-described/proposed functions, procedures, and/or methods. For example, the processor(s) 202 may process information within the memory(s) 204 to generate third information/signals and then transmit radio signals including the third information/signals through the transceiver(s) 206. The processor(s) 202 may receive radio signals including fourth information/signals through the transceiver(s) 106 and then store information obtained by processing the fourth information/signals in the memory(s) 204. The memory(s) 204 may be connected to the processor(s) 202 and may store a variety of information related to operations of the processor(s) 202. For example, the memory(s) 204 may perform a part or all of processes controlled by the processor(s) 202 or store software code including instructions for performing the afore-described/proposed procedures and/or methods. Here, the processor(s) 202 and the memory(s) 204 may be a part of a communication modem/circuit/chip designed to implement RAT (e.g., LTE or NR). The transceiver(s) 206 may be connected to the processor(s) 202 and transmit and/or receive radio signals through one or more antennas 208. Each of the transceiver(s) 206 may include a transmitter and/or a receiver. The transceiver(s) 206 is used interchangeably with RF unit(s). In the present disclosure, the wireless device may represent the communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as a physical (PHY) layer, medium access control (MAC) layer, a radio link control (RLC) layer, a packet data convergence protocol (PDCP) layer, radio resource control (RRC) layer, and a service data adaptation protocol (SDAP) layer). The one or more processors 102 and 202 may generate one or more protocol data units (PDUs) and/or one or more service data units (SDUs) according to the functions, procedures, proposals, and/or methods disclosed in the present disclosure. The one or more processors 102 and 202 may generate messages, control information, data, or information according to the functions, procedures, proposals, and/or methods disclosed in the present disclosure. The one or more processors 102 and 202 may generate signals (e.g., baseband signals) including PDUs, SDUs, messages, control information, data, or information according to the functions, procedures, proposals, and/or methods disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the functions, procedures, proposals, and/or methods disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The functions, procedures, proposals, and/or methods disclosed in the present disclosure may be implemented using firmware or software, and the firmware or software may be configured to include the modules, procedures, or functions. Firmware or software configured to perform the functions, procedures, proposals, and/or methods disclosed in the present disclosure may be included in the one or more processors 102 and 202 or stored in the one or more memories 104 and 204 so as to be driven by the one or more processors 102 and 202. The functions, procedures, proposals, and/or methods disclosed in the present disclosure may be implemented using firmware or software in the form of code, commands, and/or a set of commands.

The one or more memories 104 and 204 may be connected to the one or more processors 102 and 202 and store various types of data, signals, messages, information, programs, code, commands, and/or instructions. The one or more memories 104 and 204 may be configured by read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or radio signals/channels, mentioned in the methods and/or operational flowcharts of the present disclosure, to one or more other devices. The one or more transceivers 106 and 206 may receive user data, control information, and/or radio signals/channels, mentioned in the functions, procedures, proposals, methods, and/or operational flowcharts disclosed in the present disclosure, from one or more other devices. For example, the one or more transceivers 106 and 206 may be connected to the one or more processors 102 and 202 and transmit and receive radio signals. For example, the one or more processors 102 and 202 may perform control so that the one or more transceivers 106 and 206 may transmit user data, control information, or radio signals to one or more other devices. The one or more processors 102 and 202 may perform control so that the one or more transceivers 106 and 206 may receive user data, control information, or radio signals from one or more other devices. The one or more transceivers 106 and 206 may be connected to the one or more antennas 108 and 208. The one or more transceivers 106 and 206 may be configured to transmit and receive user data, control information, and/or radio signals/channels, mentioned in the functions, procedures, proposals, methods, and/or operational flowcharts disclosed in the present disclosure, through the one or more antennas 108 and 208. In the present disclosure, the one or more antennas may be a plurality of physical antennas or a plurality of logical antennas (e.g., antenna ports). The one or more transceivers 106 and 206 may convert received radio signals/channels etc. from RF band signals into baseband signals in order to process received user data, control information, radio signals/channels, etc. using the one or more processors 102 and 202. The one or more transceivers 106 and 206 may convert the user data, control information, radio signals/channels, etc. processed using the one or more processors 102 and 202 from the base band signals into the RF band signals. To this end, the one or more transceivers 106 and 206 may include (analog) oscillators and/or filters.

FIG. 3 illustrates another example of a wireless device capable of performing implementation(s) of the present disclosure.

Referring to FIG. 3, wireless devices 100 and 200 may correspond to the wireless devices 100 and 200 of FIG. 2 and may be configured by various elements, components, units/portions, and/or modules. For example, each of the wireless devices 100 and 200 may include a communication unit 110, a control unit 120, a memory unit 130, and additional components 140. The communication unit may include a communication circuit 112 and transceiver(s) 114. For example, the communication circuit 112 may include the one or more processors 102 and 202 and/or the one or more memories 104 and 204 of FIG. 2. For example, the transceiver(s) 114 may include the one or more transceivers 106 and 206 and/or the one or more antennas 108 and 208 of FIG. 2. The control unit 120 is electrically connected to the communication unit 110, the memory 130, and the additional components 140 and controls overall operation of the wireless devices. For example, the control unit 120 may control an electric/mechanical operation of the wireless device based on programs/code/commands/information stored in the memory unit 130. The control unit 120 may transmit the information stored in the memory unit 130 to the exterior (e.g., other communication devices) via the communication unit 110 through a wireless/wired interface or store, in the memory unit 130, information received through the wireless/wired interface from the exterior (e.g., other communication devices) via the communication unit 110.

The additional components 140 may be variously configured according to types of wireless devices. For example, the additional components 140 may include at least one of a power unit/battery, input/output (I/O) unit, a driving unit, and a computing unit. The wireless device may be implemented in the form of, without being limited to, the robot (100a of FIG. 1), the vehicles (100b-1 and 100b-2 of FIG. 1), the XR device (100c of FIG. 1), the hand-held device (100d of FIG. 1), the home appliance (100e of FIG. 1), the IoT device (100f of FIG. 1), a digital broadcast UE, a hologram device, a public safety device, an MTC device, a medicine device, a fintech device (or a finance device), a security device, a climate/environment device, the AI server/device (400 of FIG. 1), the BS (200 of FIG. 1), a network node, etc. The wireless device may be used in a mobile or fixed place according to a use-case/service.

In FIG. 3, the entirety of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module within the wireless devices 100 and 200 may further include one or more elements. For example, the control unit 120 may be configured by a set of one or more processors. As an example, the control unit 120 may be configured by a set of a communication control processor, an application processor, an electronic control unit (ECU), a graphical processing unit, and a memory control processor. As another example, the memory 130 may be configured by a random access memory (RAM), a dynamic RAM (DRAM), a read-only memory (ROM)), a flash memory, a volatile memory, a non-transitory memory, and/or a combination thereof.

In the present disclosure, the at least one memory (e.g., 104 or 204) may store instructions or programs, and the instructions or programs may cause, when executed, at least one processor operably connected to the at least one memory to perform operations according to some embodiments or implementations of the present disclosure.

In the present disclosure, a computer readable storage medium may store at least one instruction or program, and the at least one instruction or program may cause, when executed by at least one processor, the at least one processor to perform operations according to some embodiments or implementations of the present disclosure.

In the present disclosure, a processing device or apparatus may include at least one processor, and at least one computer memory operably connected to the at least one processor. The at least one computer memory may store instructions or programs, and the instructions or programs may cause, when executed, the at least one processor operably connected to the at least one memory to perform operations according to some embodiments or implementations of the present disclosure.

A communication device of the present disclosure includes at least one processor; and at least one computer memory operably connected to the at least one processor and configured to store instructions for causing, when executed, the at least one processor to perform operations according to example(s) of the present disclosure described later.

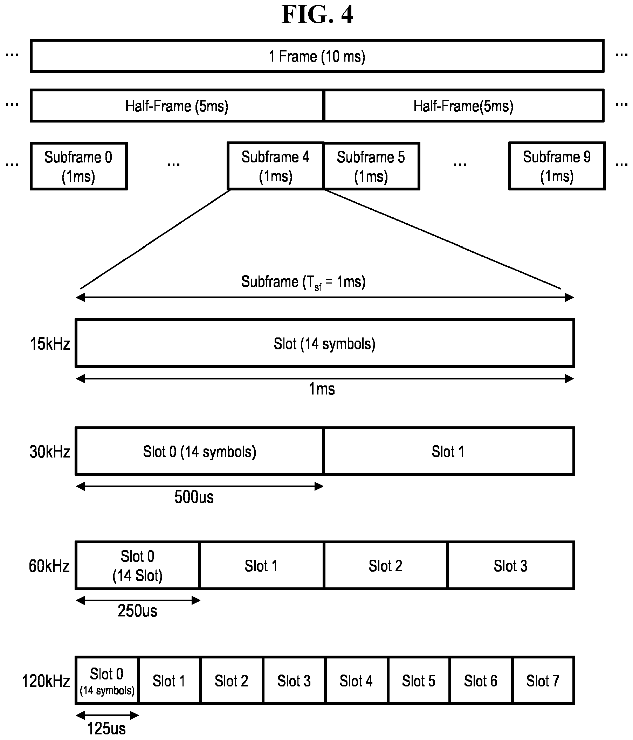

FIG. 4 illustrates an example of a frame structure used in a 3GPP-based wireless communication system.

The frame structure of FIG. 4 is purely exemplary and the number of subframes, the number of slots, and the number of symbols, in a frame, may be variously changed. In an NR system, different OFDM numerologies (e.g., subcarrier spacings (SCSs)) may be configured for multiple cells which are aggregated for one UE. Accordingly, the (absolute time) duration of a time resource including the same number of symbols (e.g., a subframe, a slot, or a transmission time interval (TTI)) may be differently configured for the aggregated cells. Here, the symbol may include an OFDM symbol (or cyclic prefix - OFDM (CP-OFDM) symbol) and an SC-FDMA symbol (or discrete Fourier transform-spread-OFDM (DFT-s-OFDM) symbol). In the present disclosure, the symbol, the OFDM-based symbol, the OFDM symbol, the CP-OFDM symbol, and the DFT-s-OFDM symbol are used interchangeably.

Referring to FIG. 4, in the NR system, UL and DL transmissions are organized into frames. Each frame has a duration of T_{f} = (△fₘₐₓ*N_{f}/100)*T_{c} = 10 ms and is divided into two half-frames of 5 ms each. A basic time unit for NR is T_{c} = 1/(△fₘₐₓ*Nr) where △fₘₐₓ = 480*10³ Hz and N_{f}= 4096. For reference, a basic time unit for LTE is Tₛ = 1/(△f_{ref}*N_{f,ref}) where △f_{ref} = 15*10³ Hz and N_{f,ref}= 2048. T_{c} and T_{f} have the relationship of a constant κ = T_{c}/T_{f} = 64. Each half-frame includes 5 subframes and a duration T_{sf} of a single subframe is 1 ms. Subframes are further divided into slots and the number of slots in a subframe depends on a subcarrier spacing. Each slot includes 14 or 12 OFDM symbols based on a cyclic prefix. In a normal CP, each slot includes 14 OFDM symbols and, in an extended CP, each slot includes 12 OFDM symbols. The numerology depends on an exponentially scalable subcarrier spacing △f = 2^{u}*15 kHz. The table below shows the number of OFDM symbols (*N*^{slot}_{symb}) per slot, the number of slots (*N*^{frame,u}ₛₗₒₜ) per frame, and the number of slots (*N*^{subframe,u}ₛₗₒₜ) per subframe.

**Table 1**

| *u* | *N*^{slot}_{symb} | *N*^{frame.u}ₛₗₒₜ | *N*^{subframe.u}ₛₗₒₜ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |

The table below shows the number of OFDM symbols per slot, the number of slots per frame, and the number of slots per subframe, according to the subcarrier spacing △f = 2^{u*}15 kHz.

**Table 2**

| *u* | *N*^{slot}_{symb} | *N*^{frame.u}ₛₗₒₜ | *N*^{subframe.u}ₛₗₒₜ |
|---|---|---|---|
| 2 | 12 | 40 | 4 |

NR frequency bands are defined as two types of frequency ranges, i.e., FR1 and FR2. FR2 is also referred to as millimeter wave (mmW). The following table shows frequency ranges within which NR may operate.

**Table 3**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

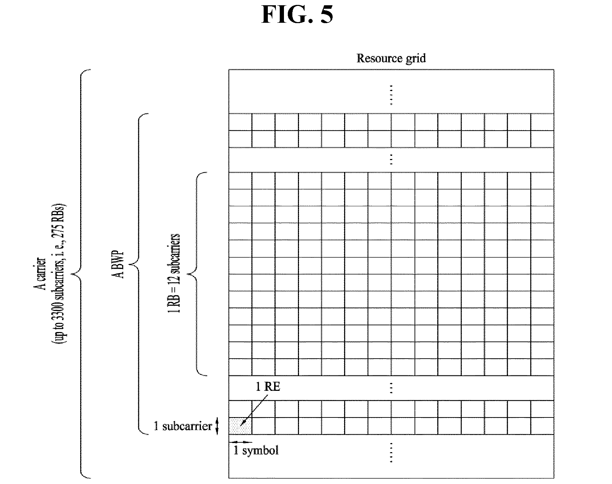

FIG. 5 illustrates a resource grid of a slot.

The slot includes multiple (e.g., 14 or 12) symbols in the time domain. For each numerology (e.g., subcarrier spacing) and carrier, a resource grid of *N*^{size,u}_{grid,x}**N*^{RB}_{sc} subcarriers and *N*^{subframe,u}_{symb} OFDM symbols is defined, starting at a common resource block (CRB) N^{start,u}_{grid} indicated by higher layer signaling (e.g. RRC signaling), where *N*^{size,u}_{grid,x} is the number of resource blocks (RBs) in the resource grid and the subscript x is DL for downlink and UL for uplink. *N*^{RB}_{sc} is the number of subcarriers per RB. In the 3GPP-based wireless communication system, *N*^{RB}_{sc} is typically 12. There is one resource grid for a given antenna port *p,* a subcarrier spacing configuration *u,* and a transmission link (DL or UL). The carrier bandwidth *N*^{size,u}_{grid} for the subcarrier spacing configuration u is given to the UE by a higher layer parameter (e.g. RRC parameter). Each element in the resource grid for the antenna port *p* and the subcarrier spacing configuration *u* is referred to as a resource element (RE) and one complex symbol may be mapped to each RE. Each RE in the resource grid is uniquely identified by an index k in the frequency domain and an index *l* representing a symbol location relative to a reference point in the time domain. In the NR system, an RB is defined by 12 consecutive subcarriers in the frequency domain. In the NR system, RBs are classified into CRBs and physical resource blocks (PRBs). The CRBs are numbered from 0 upwards in the frequency domain for the subcarrier spacing configuration u. The center of subcarrier 0 of CRB 0 for the subcarrier spacing configuration u is equal to 'Point A' which serves as a common reference point for RB grids. The PRBs are defined within a bandwidth part (BWP) and numbered from 0 to N^{size}_{BWP,i}-1, where i is a number of the BWP. The relation between a PRB n_{PRB} in a BWP i and a CRB n_{CRB} is given by: n_{PRB} = n_{CRB} + *N*^{size}_{BWP,i}, where *N*^{size}_{BWP,i} is a CRB in which the BWP starts relative to CRB 0. The BWP includes a plurality of consecutive RBs in the frequency domain. A carrier may include a maximum of N (e.g., 5) BWPs. The UE may be configured to have one or more BWPs on a given component carrier. Data communication is performed through an activated BWP and only a predetermined number of BWPs (e.g., one BWP) among BWPs configured for the UE may be active on the component carrier.

Hereinafter, physical channels that may be used in the 3GPP-based wireless communication system will be described in detail.

A PDCCH carries DCI. For example, the PDCCH (i.e., DCI) carries information about transport format and resource allocation of a downlink shared channel (DL-SCH), information about resource allocation of an uplink shared channel (UL-SCH), paging information about a paging channel (PCH), system information about the DL-SCH, information about resource allocation for a control message, such as a random access response (RAR) transmitted on a PDSCH, of a layer (hereinafter, higher layer) positioned higher than a physical layer among protocol stacks of the UE/BS, a transmit power control command, information about activation/deactivation of configured scheduling (CS), etc. DCI including resource allocation information on the DL-SCH is called PDSCH scheduling DCI, and DCI including resource allocation information on the UL-SCH is called PUSCH scheduling DCI. The DCI includes a cyclic redundancy check (CRC). The CRC is masked/scrambled with various identifiers (e.g., radio network temporary identifier (RNTI)) according to an owner or usage of the PDCCH. For example, if the PDCCH is for a specific UE, the CRS is masked with a UE identifier (e.g., cell-RNTI (C-RNTI)). If the PDCCH is for a paging message, the CRC is masked with a paging RNTI (P-RNTI). If the PDCCH is for system information (e.g., system information block (SIB)), the CRC is masked with a system information RNTI (SI-RNTI). If the PDCCH is for a random access response, the CRC is masked with a random access-RNTI (RA-RNTI).

When a PDCCH on one serving cell schedules a PDSCH or a PUSCH on another serving cell, it is referred to cross-carrier scheduling. Cross-carrier scheduling with a carrier indicator field (CIF) may allow a PDCCH on a serving cell to schedule resources on another serving cell. When a PDSCH on a serving cell schedules a PDSCH or a PUSCH on the serving cell, it is referred to as self-carrier scheduling. When the cross-carrier scheduling is used in a cell, the BS may provide information about a cell scheduling the cell to the UE. For example, the BS may inform the UE whether a serving cell is scheduled by a PDCCH on another (scheduling) cell or scheduled by the serving cell. If the serving cell is scheduled by the other (scheduling) cell, the BS may inform the UE which cell signals DL assignments and UL grants for the serving cell. In the present disclosure, a cell carrying a PDCCH is referred to as a scheduling cell, and a cell where transmission of a PUSCH or a PDSCH is scheduled by DCI included in the PDCCH, that is, a cell carrying the PUSCH or PDSCH scheduled by the PDCCH is referred to as a scheduled cell.

The PDCCH is transmitted through a control resource set (CORESET). One or more CORESETs may be configured for a UE. The CORESET is determined based on the following parameters.
- *controlResourceSetld:* ID of CORESET.
- *frequencyDomainResources:* Frequency domain resources of CORESET. The frequency domain resources of the CORESET are indicated through a bitmap, and each bit corresponds to an RB group (six consecutive RBs). For example, the most significant bit (MSB) of the bitmap corresponds to a first RB group in a BWP. The RB group corresponding to a bit having a bit value of 1 is allocated to a frequency domain resource of the CORESET.
- *duration:* Time domain resources of CORESET. The time domain resources of the CORESET represents the number of consecutive OFDMA symbols that constitute the CORESET. For example, the duration has a value from 1 to 3.
- *cce-REG-MappingType:* CCE-to-REG mapping type. An inerleaved type and a non-interleaved type are supported.
- *precoderGranularity:* Precoder granularity in the frequency domain.
- *tci-StatesPDCCH:* Information indicating a transmission configuration indication (TCI) state for a PDCCH (e.g., TCI-StateID). The TCI state is used to provide a quasi-co-location (QCL) relationship between DL RS(s) and PDCCH DMRS ports within an RS set (TCI-state).
- *tci-PresentInDCI:* Whether a TCI field is included in the DCI.
- *pdcch-DMRS-ScramblingID:* Information used to initialize a PDCCH DMRS scrambling sequence.

A CORESET, which is a set of time-frequency resources on which the UE is capable of monitoring a PDCCH, may be defined and/or configured. The UE may be configured with one or more CORESETs. The CORESET has a time duration of one to three OFDM symbols and includes a set of PRBs. The PRBs included in the CORESET and the CORESET duration may be provided to the UE through higher layer (e.g., RRC) signaling The UE may monitor a set of PDCCH candidates in configured CORESET(s) according to corresponding search space sets. In the present disclosure, monitoring implies decoding (blind decoding) of each PDCCH candidate based on monitored DCI formats. The MIB on a PBCH provides the UE with parameters (e.g., CORESET #0 configuration) for monitoring a PDCCH that schedules a PDSCH carrying SIB1. The PBCH may indicate that there is no associated SIB1. In this case, the UE may be provided with not only a frequency range where the UE is allowed to assume that there is no SSB associated with SSB1 but also may be provided with another frequency range where the UE is allowed to discover an SSB associated with SIB1. CORESET #0, which is a CORESET for scheduling at least SIB1, may be configured through the MIB or dedicated RRC signaling.

The set of the PDCCH candidates that the UE monitors is defined in terms of PDCCH search space sets. The search space sets may be common search space (CSS) sets or UE-specific search space (USS) sets. Each CORESET configuration is associated with one or more search space sets and each search space set is associated with one CORESET configuration. A search space set is determined based on the following parameters provided to the UE by the BS.
- *serachSpaceId:* SS set identifier that identifies an SS set.
- *controlResourceSetld:* Identifier that identifies the CORESET related to the search space.
- *monitoringSlotPeriodicityAndOffset:* PDCCH monitoring periodicity and PDCCH monitoring offset to configure slots for PDCCH monitoring.
- *duration:* The number of consecutive slots that last in a search space at each occasion, i.e., at each period, as given by *monitoringSlotPeriodicityAndOffset.*
- *monitoringSymbolsWithinSlot:* a PDCCH monitoring pattern within a slot, indicating first symbol(s) of the CORESET within a slot for PDCCH monitoring.
- *nrofCandidates:* a number of PDCCH candidates per CCE aggregation level.

A UE monitors PDCCH candidates in PDCCH monitoring occasions only. The UE determines a PDCCH monitoring occasion from the PDCCH monitoring periodicity, the PDCCH monitoring offset, and the PDCCH monitoring pattern within a slot. The parameter *monitoringSymbolsWithinSlot* may indicate the first symbol(s) for PDCCH monitoring in the slots configured for PDCCH monitoring (e.g., see *monitoringSlotPeriodicityAndOffset and duration).* For example, when *monitoringSymbolsWithinSlot* is a 14-bit parameter, the most significant (leftmost) bit may represent the first OFDM symbol in the slot, and the second most significant (leftmost) bit may represent the second OFDM symbol in the slot. In this way, the bits of *monitoringSymbolsWithinSlot* may represent the 14 OFDM symbols of the slot, respectively. For example, bit(s) set to 1 among the bits in *monitoringSymbolsWithinSlot* may identify the first symbol(s) of the CORESET in the slot.

The following table illustrates search space sets and related RNTIs thereof, along with usage examples.

**Table 4**

| Search Space | Type | RNTI | Use Case |
|---|---|---|---|
| Type0-PDCCH | Common | SI-RNTI on a primary cell | SIB Decoding |
| Type0A-PDCCH | Common | SI-RNTI on a primary cell | SIB decoding |
| Type1-PDCCH | Common | RA-RNTI or TC-RNTI on a primary cell | Msg2, Msg4 decoding in RACH |
| Type2-PDCCH | Common | P-RNTI on a primary cell | Paging Decoding |
| Type3-PDCCH | Common | INT-RNTI, SFI-RNTI, TPC-PUSCH-RNTI, TPC-PUCCH-RNTI, TPC-SRS-RNTI, C-RNTI, MCS-C-RNTI or CS-RNTI(s) | |
| UE Specific | UE Specific | C-RNTI, MCS-C-RNTI or CS-RNTI(s) | User specific PDSCH decoding |

The following table shows DCI formats carried by a PDCCH.

**Table 5**

| **DCI format** | **Usage** |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a code block group (CBG)-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH. For a CSS, DCI format 0_0 and DCI format 1_0 have fixed sizes after the BWP size is initially given by RRC. For a USS, DCI format 0_0 and DCI format 1_0 are fixed in size in fields other than a frequency domain resource assignment (FDRA) field, and the FDRA field may vary in size by configuration of a related parameter by the BS. In DCI format 0_1 and DCI format 1_1, the size of the DCI field may be changed by various RRC reconfigurations by the BS. DCI format 2_0 may be used to transfer dynamic slot format information (e.g., SFI DCI) to the UE, and DCI format 2_1 may be used to transfer downlink pre-emption information to the UE. DCI format 2_0 and/or DCI format 2_1 may be transferred to UEs within a corresponding group via a group common PDCCH, which is a PDCCH transferred to UEs defined as one group.

A PDSCH is a physical layer UL channel for UL data transport. The PDSCH carries DL data (e.g., DL-SCH transport block) and is subjected to modulation such as quadrature phase shift keying (QPSK), 16 quadrature amplitude modulation (QAM), 64 QAM, 256 QAM, etc. A codeword is generated by encoding a transport block (TB). The PDSCH may carry a maximum of two codewords. Scrambling and modulation mapping per codeword may be performed and modulation symbols generated from each codeword may be mapped to one or more layers. Each layer is mapped to a radio resource together with a DMRS and generated as an OFDM symbol signal. Then, the OFDM symbol signal is transmitted through a corresponding antenna port. The PDSCH may be dynamically scheduled by the PDCCH (dynamic scheduling) or semi-statically scheduled based on higher layer (e.g., RRC) signaling (and/or Layer 1 (L1) signaling (e.g., PDCCH)) (Configured Scheduling (CS)). Therefore, in dynamic scheduling, PDSCH transmission is accompanied by the PDCCH, but in the CS, PDSCH transmission is not accompanied by the PDCCH. The CS includes semi-persistent scheduling (SPS).

A PUCCH is a physical layer UL channel for uplink control information (UCI) transmission. The PUCCH carries UCI. The UCI includes the following information.
- Scheduling request (SR): Information that is used to request a UL-SCH resource.
- Hybrid automatic repeat request (HARQ) - acknowledgment (ACK): A response to a DL data packet (e.g., codeword) on the PDSCH. HARQ-ACK indicates whether the DL data packet has been successfully received by a communication device. In response to a single codeword, 1-bit HARQ-ACK may be transmitted. In response to two codewords, 2-bit HARQ-ACK may be transmitted. The HARQ-ACK response includes positive ACK (simply, ACK), negative ACK (NACK), discontinuous transmission (DTX), or NACK/DTX. Here, the term HARQ-ACK is used interchangeably with HARQ ACK/NACK, ACK/NACK, or A/N.
- Channel state information (CSI): Feedback information about a DL channel. The CSI may include channel quality information (CQI), a rank indicator (RI), a precoding matrix indicator (PMI), a CSI-RS resource indicator (CRI), an SS/PBCH resource block indicator (SSBRI), and a layer indicator (L1). The CSI may be classified into CSI part 1 and CSI part 2 according to UCI type included in the CSI. For example, the CRI, RI, and/or the CQI for the first codeword may be included in CSI part 1, and LI, PMI, and/or the CQI for the second codeword may be included in CSI part 2.

In the present disclosure, for convenience, PUCCH resources configured/indicated for/to the UE by the BS for HARQ-ACK, SR, and CSI transmission are referred to as an HARQ-ACK PUCCH resource, an SR PUCCH resource, and a CSI PUCCH resource, respectively.

PUCCH formats may be defined as follows according to UCI payload sizes and/or transmission lengths (e.g., the number of symbols included in PUCCH resources). In regard to the PUCCH formats, reference may also be made to Table 6.

### (0) PUCCH format 0 (PF0 or F0)

- Supported UCI payload size: up to K bits (e.g., K=2)
- Number of OFDM symbols constituting a single PUCCH: 1 to X symbols (e.g., X=2)
- Transmission structure: Only a UCI signal without a DMRS is included in PUCCH format 0. The UE transmits a UCI state by selecting and transmitting one of a plurality of sequences. For example, the UE transmits specific UCI to the BS by transmitting one of a plurality of sequences through a PUCCH, which is PUCCH format 0. The UE transmits the PUCCH, which is PUCCH format 0, in PUCCH resources for a corresponding SR configuration only upon transmitting a positive SR.
- Configuration for PUCCH format 0 includes the following parameters for a corresponding PUCCH resource: an index for initial cyclic shift, the number of symbols for PUCCH transmission, and/or the first symbol for PUCCH transmission.

### (1) PUCCH format 1 (PF1 or F1)

- Supported UCI payload size: up to K bits (e.g., K=2)
- Number of OFDM symbols constituting a single PUCCH: Y to Z symbols (e.g., Y=4 and Z=14)
- Transmission structure: The DMRS and UCI are configured/mapped in TDM in/to different OFDM symbols. In other words, the DMRS is transmitted in symbols in which modulation symbols are not transmitted and the UCI is represented as the product between a specific sequence (e.g., orthogonal cover code (OCC)) and a modulation (e.g., QPSK) symbol. Code division multiplexing (CDM) is supported between a plurality of PUCCH resources (conforming to PUCCH format 1) (within the same RB) by applying cyclic shifts (CSs)/OCCs to both the UCI and the DMRS. PUCCH format 1 carries the UCI of up to 2 bits and the modulation symbols are spread by the OCC (differently configured depending on whether frequency hopping is performed) in the time domain.
- Configuration for PUCCH format 1 includes the following parameters for a corresponding PUCCH resource: an index for initial cyclic shift, the number of symbols for PUCCH transmission, the first symbol for PUCCH transmission, and/or an index for the OCC.

### (2) PUCCH format 2 (PF2 or F2)

- Supported UCI payload size: more than K bits (e.g., K=2)
- Number of OFDM symbols constituting a single PUCCH: 1 to X symbols (e.g., X=2)
- Transmission structure: The DMRS and UCI are configured/mapped using frequency division multiplexing (FDM) within the same symbol. The UE transmits the UCI by applying only IFFT without DFT to encoded UCI bits. PUCCH format 2 carries UCI of a larger bit size than K bits and modulation symbols are subjected to FDM with the DMRS, for transmission. For example, the DMRS is located in symbol indexes #1, #4, #7, and #10 within a given RB with the density of 1/3. A pseudo noise (PN) sequence is used for a DMRS sequence. Frequency hopping may be activated for 2-symbol PUCCH format 2.
- Configuration for PUCCH format 2 includes the following parameters for a corresponding PUCCH resource: the number of PRBs, the number of symbols for PUCCH transmission, and/or the first symbol for PUCCH transmission.

### (3) PUCCH format 3 (PF3 or F3)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. The UE transmits the UCI by applying DFT to encoded UCI bits. PUCCH format 3 does not support UE multiplexing for the same time-frequency resource (e.g., same PRB).

Configuration for PUCCH format 3 includes the following parameters for a corresponding PUCCH resource: the number of PRBs, the number of symbols for PUCCH transmission, and/or the first symbol for PUCCH transmission.

### (4) PUCCH format 4 (PF4 or F4)

- Supported UCI payload size: more than K bits (e.g., K=2)
- Number of OFDM symbols constituting a single PUCCH: Y to Z symbols (e.g., Y=4 and Z=14)
- Transmission structure: The DMRS and UCI are configured/mapped in TDM for/to different OFDM symbols. PUCCH format 4 may multiplex up to 4 UEs in the same PRB, by applying an OCC at the front end of DFT and applying a CS (or interleaved FDM (IFDM) mapping) to the DMRS. In other words, modulation symbols of the UCI are subjected to TDM with the DMRS, for transmission.
- Configuration for PUCCH format 4 includes the following parameters for a corresponding PUCCH resource: the number of symbols for PUCCH transmission, length for the OCC, an index for the OCC, and the first symbol for PUCCH transmission.

The table below shows the PUCCH formats. The PUCCH formats may be divided into short PUCCH formats (formats 0 and 2) and long PUCCH formats (formats 1, 3, and 4) according to PUCCH transmission length.

**Table 6**

| PUCCH format | Length in OFDM symbols N^{PUCCHS}_{symb} | Number of bits | Usage | Etc. |
|---|---|---|---|---|
| 0 | 1-2 | =<2 | HARQ, SR | Sequence selection |
| 1 | 4-14 | =<2 | HARQ, [SR] | Sequence modulation |
| 2 | 1-2 | >2 | HARQ, CSI, [SR] | CP-OFDM |
| 3 | 4-14 | >2 | HARQ, CSI, [SR] | DFT-s-OFDM(no UE multiplexing) |
| 4 | 4-14 | >2 | HARQ, CSI, [SR] | DFT-s-OFDM(Pre DFT OCC) |

A PUCCH resource may be determined according to a UCI type (e.g., A/N, SR, or CSI). A PUCCH resource used for UCI transmission may be determined based on a UCI (payload) size. For example, the BS may configure a plurality of PUCCH resource sets for the UE, and the UE may select a specific PUCCH resource set corresponding to a specific range according to the range of the UCI (payload) size (e.g., numbers of UCI bits). For example, the UE may select one of the following PUCCH resource sets according to the number of UCI bits, N_{UCI}.
- PUCCH resource set #0, if the number of UCI bits =< 2
- PUCCH resource set #1, if 2< the number of UCI bits =< N₁
   ...
- PUCCH resource set #(K-1), if N_{K-2} < the number of UCI bits =< N_{K-1}

Here, K represents the number of PUCCH resource sets (K>1) and Nᵢ represents a maximum number of UCI bits supported by PUCCH resource set #i. For example, PUCCH resource set #1 may include resources of PUCCH formats 0 to 1, and the other PUCCH resource sets may include resources of PUCCH formats 2 to 4.

Configuration for each PUCCH resource includes a PUCCH resource index, a start PRB index, and configuration for one of PUCCH format 0 to PUCCH format 4. The UE is configured with a code rate for multiplexing HARQ-ACK, SR, and CSI report(s) within PUCCH transmission using PUCCH format 2, PUCCH format 3, or PUCCH format 4, by the BS through a higher layer parameter maxCodeRate. The higher layer parameter maxCodeRate is used to determine how to feed back the UCI on PUCCH resources for PUCCH format 2, 3, or 4.

If the UCI type is SR and CSI, a PUCCH resource to be used for UCI transmission in a PUCCH resource set may be configured for the UE through higher layer signaling (e.g., RRC signaling). If the UCI type is HARQ-ACK for a semi-persistent scheduling (SPS) PDSCH, the PUCCH resource to be used for UCI transmission in the PUCCH resource set may be configured for the UE through higher layer signaling (e.g., RRC signaling). On the other hand, if the UCI type is HARQ-ACK for a PDSCH scheduled by DCI, the PUCCH resource to be used for UCI transmission in the PUCCH resource set may be scheduled by the DCI.

In the case of DCI-based PUCCH resource scheduling, the BS may transmit the DCI to the UE on a PDCCH and indicate a PUCCH resource to be used for UCI transmission in a specific PUCCH resource set by an ACK/NACK resource indicator (ARI) in the DCI. The ARI may be used to indicate a PUCCH resource for ACK/NACK transmission and also be referred to as a PUCCH resource indicator (PRI). Here, the DCI may be used for PDSCH scheduling and the UCI may include HARQ-ACK for a PDSCH. The BS may configure a PUCCH resource set including a larger number of PUCCH resources than states representable by the ARI by (UE-specific) higher layer (e.g., RRC) signaling for the UE. The ARI may indicate a PUCCH resource subset of the PUCCH resource set and which PUCCH resource in the indicated PUCCH resource subset is to be used may be determined according to an implicit rule based on transmission resource information about the PDCCH (e.g., the starting CCE index of the PDCCH).

For UL-SCH data transmission, the UE should include UL resources available for the UE and, for DL-SCH data reception, the UE should include DL resources available for the UE. The UL resources and the DL resources are assigned to the UE by the BS through resource allocation. Resource allocation may include time domain resource allocation (TDRA) and frequency domain resource allocation (FDRA). In the present disclosure, UL resource allocation is also referred to as a UL grant and DL resource allocation is referred to as DL assignment. The UL grant is dynamically received by the UE on the PDCCH or in RAR or semi-persistently configured for the UE by the BS through RRC signaling. DL assignment is dynamically received by the UE on the PDCCH or semi-persistently configured for the UE by the BS through RRC signaling.

On UL, the BS may dynamically allocate UL resources to the UE through PDCCH(s) addressed to a cell radio network temporary Identifier (C-RNTI). The UE monitors the PDCCH(s) in order to discover possible UL grant(s) for UL transmission. The BS may allocate the UL resources using a configured grant to the UE. Two types of configured grants, Type 1 and Type 2, may be used. In Type 1, the BS directly provides the configured UL grant (including periodicity) through RRC signaling. In Type 2, the BS may configure a periodicity of an RRC-configured UL grant through RRC signaling and signal, activate, or deactivate the configured UL grant through the PDCCH addressed to a configured scheduling RNTI (CS-RNTI). For example, in Type 2, the PDCCH addressed to the CS-RNTI indicates that the corresponding UL grant may be implicitly reused according to the configured periodicity through RRC signaling until deactivation.

On DL, the BS may dynamically allocate DL resources to the UE through PDCCH(s) addressed to the C-RNTI. The UE monitors the PDCCH(s) in order to discover possible DL grant(s). The BS may allocate the DL resources to the UE using SPS. The BS may configure a periodicity of configured DL assignment through RRC signaling and signal, activate, or deactivate the configured DL assignment through the PDCCH addressed to the CS-RNTI. For example, the PDCCH addressed to the CS-RNTI indicates that the corresponding DL assignment may be implicitly reused according to the configured periodicity through RRC signaling until deactivation.

The PUSCH carries UL data (e.g., UL-SCH TB) and/or UL control information (UCI) and is transmitted based on a cyclic prefix-orthogonal frequency division multiplexing (CP-OFDM) waveform or a discrete Fourier transform-spread-OFDM (DFT-s-OFDM) waveform. When the PUSCH is transmitted based on the DFT-s-OFDM waveform, the UE transmits the PUSCH by applying transform precoding. For example, when transform precoding is disabled, the UE may transmit the PUSCH based on the CP-OFDM waveform, and when transform precoding is enabled, the UE may transmit the PUSCH based on the CP-OFDM waveform or the DFT-s-OFDM waveform. The PUSCH may be dynamically scheduled by the PDCCH (dynamic scheduling) or semi-statically scheduled based on higher layer (e.g., RRC) signaling (and/or Layer 1 (L1) signaling (e.g., PDCCH)) (Configured Scheduling (CS)). Therefore, in dynamic scheduling, PUSCH transmission is accompanied by the PDCCH, but in the CS, PUSCH transmission is not accompanied by the PDCCH. The CS includes Type-1 configured grant (CG) PUSCH transmission and Type-2 CG PUSCH transmission. In the Type-1 CG, all parameters for PUSCH transmission are signaled via a higher layer. In the Type-2 CG, some of the parameters for PUSCH transmission are signaled via a higher layer and the remaining parameters are signaled by the PDCCH. Basically, in the CS, PUSCH transmission is not accompanied by the PDCCH.

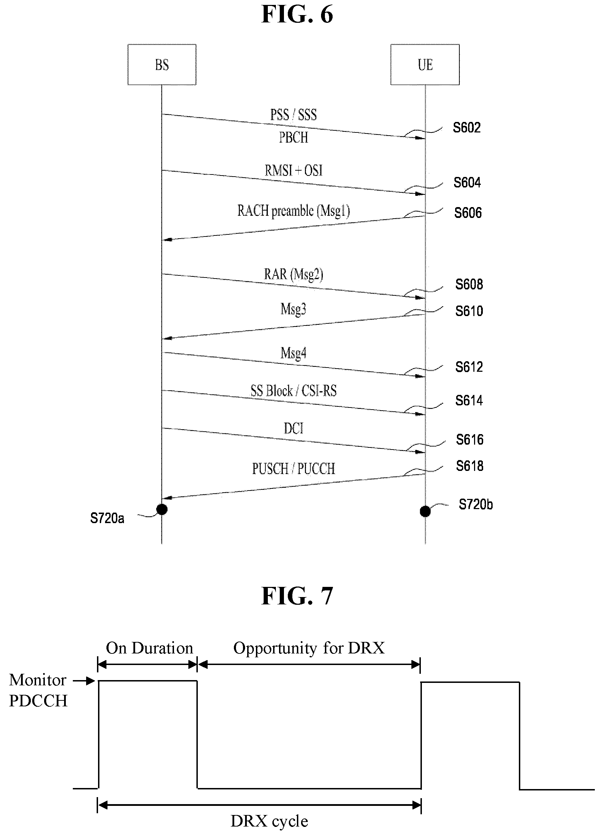

FIG. 6 illustrates a network communication process for performing implementation(s) of the present disclosure. In detail, FIG. 6 illustrates an initial network connection and subsequent communication processes.

The UE may perform a network communication process for performing procedures and/or methods described in the present disclosure. For example, the UE may receive and store, in a memory system, information and configuration information necessary to perform the procedures and/or methods described in the present disclosure while performing an access to a network (e.g., a BS). The configuration information required to perform implementation(s) according to the present disclosure may be received via higher layer (e.g., RRC layer or MAC layer) signaling.

In the NR, a physical channel and a reference signal may be transmitted using beamforming. When beam-forming based signal transmission is supported, a beam management process may be involved to align beams between the BS and the UE. In the present disclosure, signals may be transmitted/received using beamforming. In a radio resource control (RRC)_DLE mode, beam alignment may be performed based on SSB. On the other hand, in an RRC _ONNECTED mode, beam alignment may be performed based on CSI-RS (in DL) and SRS (in UL). When beamforming-based signal transmission is not supported, a beam-related operation may be omitted in the description below.

Referring to FIG. 6, the BS may transmit the SSB periodically (S602). Here, the SSB includes PSS/SSS/PBCH. The SSB may be transmitted using beam sweeping. Then, the BS may transmit remaining minimum system information (RMSI) and other system information (OSI) (S604). The RMSI may include information required for the UE to initially access the BS (e.g., PRACH configuration information). The UE performs SSB detection and then identifies the best SSB. Then, the UE may transmit a RACH preamble (Msg1) to the BS by using a PRACH resource linked/corresponding to an index (i.e., beam) of the best SSB (S606). A beam direction of the RACH preamble is related to the PRACH resource. The association between the PRACH resource (and/or RACH preamble) and SSB (index) may be established via system information (e.g., RMSI). Then, as a part of the RACH process, the BS may transmit a random access response (RAR) (Msg2) in response to the RACH preamble (S608), the UE may transmit Msg3 (e.g., RRC connection request) by using the UL grant in the RAR (S610), and the BS may transmit a contention resolution message (Msg4) (S620). Msg4 may include RRC connection setup.

When the RRC connection is established between the BS and the UE through the RACH process, subsequent beam alignment may be performed based on SSB/CSI-RS (in DL) and SRS (in UL). For example, the UE may receive the SSB/CSI-RS (S614). The SSB/CSI-RS may be used by the UE to generate a beam/CSI report. The BS may request the beam/CSI report from the UE through DCI (S616). In this case, the UE may generate the beam/CSI report based on the SSB/CSI-RS and transmit the generated beam/CSI report to the BS through the PUSCH/PUCCH (S618). The beam/CSI report may include a beam measurement result, and information about a preferred beam. The BS and the UE may switch a beam based on the beam/CSI report (S620a and S620b).

Then, the BS and the UE may perform the procedures and/or methods described in the present disclosure. For example, the UE and the BS may process information in the memory and transmit a wireless signal or process a received wireless signal and store the signal in the memory based on configuration information obtained during a network access process (e.g., a system information obtaining process or an RRC connection process via RACH) according to the proposal of the present disclosure. Here, the wireless signal may include at least one of the PDCCH, the PDSCH, and the reference signal (RS) for DL, and at least one of the PUCCH, the PUSCH, and the SRS for UL.

FIG. 7 illustrates a discontinuous reception (DRX) operation. In particular, FIG. 7 illustrates a DRX cycle for a UE in an RRC _CONNECTED state.

The UE may perform the DRX operation while performing a process and/or method according to some implementations of the present disclosure. A UE configured with the DRX may reduce power consumption by receiving a DL signal discontinuously. The DRX operation may be performed in an RRC_IDLE state, an RRC _INACTIVE state, and an RRC_CONNECTED state. In the RRC_IDLE and RRC_INACTIVE states, the DRX is used to discontinuously receive a paging signal. Hereinafter, DRX performed in RRC _CONNECTED state (RRC_CONNECTED DRX) is described.

Referring to FIG. 7, a DRX cycle is configured with an ON duration and an opportunity for DRX. The DRX cycle defines a time interval with which the ON duration is repeated periodically. The ON duration represents a time duration in which the UE monitors to receive the PDCCH. When the DRX is configured, the UE performs PDCCH monitoring during the ON duration. When the PDCCH is successfully detected while monitoring the PDCCH, the UE starts an inactivity timer and maintains the timer in an awake state. On the other hand, when no PDCCH is successfully detected while monitoring the PDCCH, the UE enters a sleep state after the ON duration ends. Therefore, when the DRX is configured, PDCCH monitoring/reception may be performed discontinuously in the time domain when performing methods and/or procedures according to some implementations of the present disclosure. For example, when the DRX is configured, the PDCCH reception occasion (e.g., slot having PDCCH search space) may be configured discontinuously according to the DRX configuration. On the other hand, when the DRX is not configured, PDCCH monitoring/reception may be performed continuously in the time domain when performing methods and/or procedures according to some implementations of the present disclosure. For example, when the DRX is not configured, the PDCCH reception opportunity (e.g., slot having PDCCH search space) may be configured consecutively. PDCCH monitoring may be limited during the time duration configured as a measurement gap regardless of whether the DRX is configured.

The following table shows a UE process related to the DRX. Referring to the table below, DRX configuration information is received via higher layer (e.g. RRC) signaling, and whether the DRX is turned on/off is controlled by a DRX command of the MAC layer. When the DRX is configured, the UE may perform PDCCH monitoring discontinuously as illustrated in FIG. 7.

**Table 7**

| | Type of signals | UE procedure |
|---|---|---|
| 1st step | RRC signalling | - Receive DRX configuration information |
| | (MAC-CellGroupConfig) | |
| 2nd Step | MAC CE ((Long) DRX command MAC CE) | - Receive DRX command |
| 3rd Step | - | - Monitor a PDCCH during an on-duration of a DRX cycle |

MAC-CellGroupConfig includes configuration information required to configure MAC parameters for a cell group. MAC-CellGroupConfig may also include DRX configuration information. For example, MAC-CellGroupConfig may include the following parameter information to define the DRX.
- *drx-OnDurationTimer:* The length of a start duration of the DRX cycle, also called the ON duration timer in the present disclosure
- *drx-SlotOffset:* Delay indication for slot before *drx-OnDurationTimer* starts
- *drx-StartOffset:* Specifies a subframe in which the DRX cycle starts
- *drx-InactivityTimer:* The length of the time duration in which the UE remains awake after a PDCCH opportunity is detected indicating initial UL or DL data, also called the inactivity timer in the present disclosure.
- *drx-HARQ-RTT-TimerDL:* The maximum time duration between reception of DL initial transmission and reception of DL retransmission
- *drx-HARQ-RTT-TimerDL:* The maximum time duration between reception of grant for UL initial transmission and reception of grant for UL retransmission
- *drx-LongCycleStartOffset:* Time length and starting point of the DRX cycle
- *drx-ShortCycle* (optional): Time length of short DRX cycle
- *drx-ShortCycleTimer* (optional): Short DRX cycle operation occasion

For example, a value in multiples of the short DRX cycle may be configured by drx-CycleTimer. For example, the value of n may correspond to n*drx-ShortCycle.

The UE may perform PDCCH monitoring on serving cells within a DRX group if the DRX group is within the active time. In this case, the DRX group refers to a group of serving cells that are configured by RRC and have the same DRX active time. When DRX is configured, the Active Time for serving Cells in a DRX group includes the time while i) drx-onDurationTimer or drx-InactivityTimer configured for the DRX group is running, or ii) drx-RetransmissionTimerDL or drx-RetransmissionTimerUL is running on any serving Cell in the DRX group; or ra-ContentionResoultionTimer or msgB-RsponseWindow is running; or a PDCCH indicating a new transmission addressed to the C-RNTI of a MAC entity of the UE has not been received after successful reception of a random access response for the Random Access Preamble not selected by the MAC entity among the contention-based random access preambles.

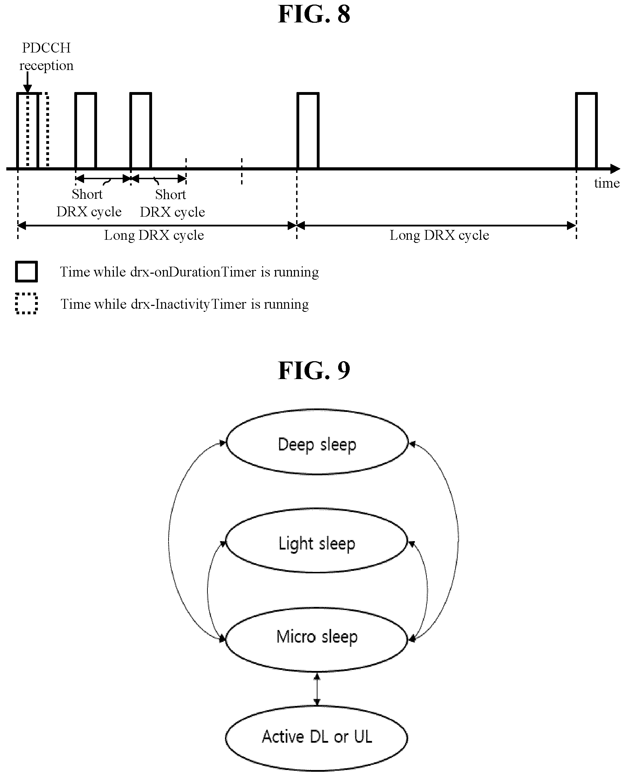

FIG. 8 illustrates a case in which a long DRX cycle and a short DRX cycle are configured. Specifically, FIG. 8 shows a case in which drx-ShortCycleTimer is set to 2.

The BS may configure a long DRX cycle and an additional short DRX cycle, which is shorter than the long DRX cycle. If no short DRX cycle is configured, the UE may follow the long DRX cycle. When configuring the short DRX cycle, the BS may set the duration of the long DRX cycle to be a positive integer multiple of the short DRX cycle. If there is no data activity during the on-duration of the long DRX cycle, the UE may follow the long DRX cycle as if no short DRX cycle is configured. If there is data activity during the on-duration of the long DRX cycle, for example, while drx-onDurationTimer is running, the UE switches to the short DRX cycle and follows the short DRX cycle for a certain period of time (e.g., while drx-ShortCycleTimer is running). Referring to FIG. 8, if there is no data activity during the time that the UE follows the short DRX cycle, for example, if there is no data activity during the period defined by drx-ShortCycleTimer * drx-ShortCycle, the UE switches from short DRX cycles each having the duration by drx-ShortCycleTimer to the long DRX cycle.

It is reported that power consumed by an NR BS is 3 to 4 times higher than power consumed by an LTE BS due to denser BS installation and use of more antennas/bandwidth/frequency bands, or the like, compared to an LTE system. To resolve the problem of increased operating costs for operators and establish an eco-friendly network, a study item is approved to discuss methods to reduce energy consumption of the BS.

In detail, the following enhancement techniques are considered to improve the energy saving capability of the BS in terms of transmission and reception in the corresponding item.
- How to more efficiently apply one or more network energy saving (NES) techniques in time, frequency, space and power domains for dynamically and/or semi-statically operation and finer granularity adaptation in transmission and reception based on UE assistance information and potential support/feedback from the UE.

FIG. 9 illustrates network energy saving (NES) according to the present disclosure.

3GPP RAN WG1 defines an energy consumption model and simulation methodology for the BS to show that energy consumption gains are to be obtained by applying NES technology. In detail, referring to FIG. 9, a sleep state and active state of the BS are defined and a transition method for each state is determined. A relative power value consumed by the BS in each state, a time required for state transition, and energy are modeled. In a sleep state, the BS neither transmits nor receives. In an active state, the BS performs transmission and/or reception.

The technologies discussed in 3GPP RAN WG1 for NES may be divided into four domains (time, frequency, space, and power domains) as shown in the following table, and specific technologies for each domain are as shown in the following table.

A method of controlling turning on and off a UE-common signal (e.g., SSB, SIB, or paging) or UE-specific signal (e.g., CSI-RS) using time-domain NES techniques, a method of transmitting a wake-up signal from a UE to wake up a BS in an inactive state, and a method of controlling transmission/reception of a UE according to a DTX/DRX pattern of a BS are discussed.

As frequency-domain NES techniques, a method of switching an SCell and a bandwidth part (BWP) or controlling a bandwidth of the BWP without a synchronization signal block (SSB) in inter-band CA situations is discussed.

As space-domain NES techniques, a method of supporting on/off operations per antenna port or per transmission and reception point (TRP) of a BS and improving associated CSI measurements and reporting is discussed.

As power-domain NES techniques, a method of dynamically changing power of DL (e.g., SSB, CSI-RS, or PDSCH), a method of compensating digital distortion of a BS or a UE, and a method of increasing transmission efficiency by maximizing power amplifier (PA) efficiency by applying a tone reservation scheme are discussed.

**Table 8**

| **Time domain techniques** |
|---|
| Adaptation of common signals and channels |
| Dynamic adaptation of UE specific signals and channels |
| Wake up of gNB triggered by UE wake up signal |
| Adaptation of DTX/DRX |
| Adaptation of SSB/SIB1 |

| **Frequency domain techniques** |
|---|
| Multi-carrier energy saving enhancements |
| Dynamic adaptation of bandwidth part of UE(s) within a carrier |
| Dynamic adaptation of bandwidth of active BWP |

| **Spatial domain techniques** |
|---|
| Dynamic adaptation of spatial elements |
| TRP muting/adaptation in multi-TRP operation |

| **Power domain techniques** |
|---|
| Adaptation of transmission power of signals and channels |
| Enhancements to assist gNB digital pre-distortion |
| Adaptation of transceiver processing algorithm |
| PA backoff adaptation |
| UE post-distortion |

Except for the technologies commonly discussed in 3GPP RAN WG1 and 3GPP RAN WG2, NES technologies discussed in the 3GPP RAN WG2 include a method for NES-capable UEs or existing NR UEs to access an NES cell, and an efficient handover method for UEs accessing NES cells.

After the UE initially connects to the BS and enters a connected mode, the UE may continuously monitor the PDCCH to check if there is a transmission scheduled for the UE in each configured search space (SS). However, if this scheduling is not always present, a battery of the UE may be quickly drained due to unnecessary PDCCH monitoring every time. Therefore, the BS may configure connected mode discontinuous reception (C-DRX) to obtain a power saving effect of the UE by configuring a time duration (ON duration) during which PDCCH monitoring is performed and a duration (OFF duration) during which PDCCH monitoring is not performed. The UE performs PDCCH monitoring in periodically configured ON duration to check if there is DL/UL to receive/transmit, and when a PDCCH is received, the UE performs DL reception or UL transmission as instructed. In the case of UL of the UE, regardless of C-DRX, when there is data to be transmitted in a UL buffer, the UE may wake up from a sleep mode and transmit SR, and in the case of a UE in an idle mode, the UE may operate in idle mode DRX (I-DRX) that periodically performs paging monitoring and enters sleep again if the UE is not a target UE. In a C-DRX operation, a time duration configured as ON and OFF durations is repeated, which is called a DRX cycle, a length of the DRX cycle is defined as a time from a starting point of the ON duration to a starting point of a next ON duration, and there are a long DRX cycle and a short DRX cycle. When a length of the DRX cycle increases, the latency may increase because the BS needs to wait until the next ON duration of the UE when a PDSCH to be transmitted occurs immediately after an end of a specific ON duration of the UE. In terms of the BS, the UE does not transmit P-CSI or SRS during the OFF duration, and thus the resource may be allocated to another UE to increase resource utilization, and the BS may also operate in energy saving mode to save power during the OFF duration of the UE.

A long DRX cycle and a short DRX cycle may be configured simultaneously, and the long DRX cycle may be configured to be an integer multiple of the short DRX cycle. In this case, the On duration timer values of the long DRX cycle and the short DRX cycle may be equal to each other. If there is no data activity (e.g., PDCCH reception) during the ON period of the long DRX cycle, an operation may be performed in a long DRX cycle, if there is data activity, the operation may be performed in a short DRX cycle as long as the short DRX cycle timer (*drx-ShortCycleTimer*), and if there is no data activity during the ON duration of the short DRX cycle, switching may be performed back to the long DRX cycle. In this case, the start of the ON duration in a short DRX cycle is determined by the *drx-StartOffset and drx-SlotOffet* values, similar to a long DRX cycle.

In some scenarios, the BS may instruct the UE to enter a DRX sleep state directly without operating in an active mode until the end of the ON duration via the DRX command MAC control element (CE). That is, the current active time may be terminated and the DRX cycle may be entered directly. When only a long DRX cycle is configured for the UE, the UE operates in a long DRX cycle mode, and when a short DRX cycle is configured, the UE enters a short DRX cycle mode immediately after receiving a DRX command MAC CE. When the BS instructs the long DRX command MAC CE, the BS may operate in the long DRX cycle mode even if the short DRX cycle is configured.

According to some implementations of the present disclosure, the BS operating in an NES mode for energy saving may mean, for example, that the BS operates in such a way that power consumption of the BS and the UE is reduced by configuring a plurality of OFF durations, during which a specific DL signal is not transmitted for a specific time duration, in advance and dynamically indicating one of the OFF durations to indicate that the corresponding DL signal is not be transmitted during a predefined time duration. In this case, the OFF duration may mean a discontinuous transmission (DTX) duration of the BS. When BWP switching, dynamic RB adaptation, or the like is performed in frequency domain as well as time domain and when a specific receive antenna port of the BS is turned off semi-statically or dynamically in spatial domain, this mean operating to obtain an effect of reducing power consumption of BS and UE by instructing the UE to turn off UL signal and/or channel or some TX antenna ports of a UL signal and/or channel that perform reception through that antenna port.

According to the present embodiments, methods and procedures for reducing power consumption and saving energy of the BS and the UE according to the implementations of the present disclosure. In detail, time-domain (also called time-axis) BS energy saving methods and procedures related to C-DRX operation are described. For example, methods and procedures for a BS to indicate a DRX command to UE(s) via downlink control information (DCI) and/or medium access control element (MAC CE) are described.

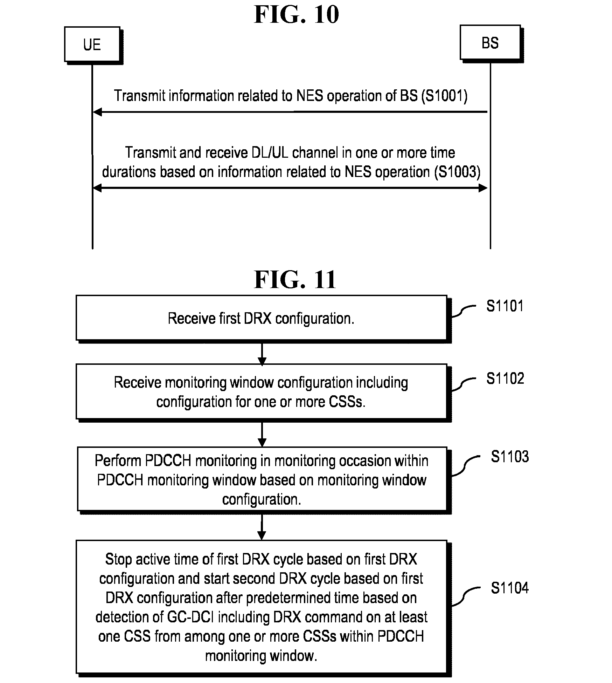

FIG. 10 illustrates a flow of an operation of a network according to some implementations of the present disclosure.

Referring to FIG. 10, the BS may transmit information related to an NES operation of the BS to the UE (S1001). The information related to the NES operation may include information related to ON/OFF for one or more time durations or information related to whether the BS operates in an NES mode. The information related to the NES operation may include information related to a periodicity of DL/UL channel(s) and/or signal(s) depending on the NES mode. The BS may transmit the information related to the NES operation to the UE based on at least one of DL channel transmission methods according to some implementations of the present disclosure.

The BS and the UE may transmit and/or receive DL/UL channel(s) and/or signal(s) in one or more time durations based on information related to the NES operation (S1003). The BS and the UE may transmit and/or receive DL/UL channel(s) and/or signal(s) based on at least one of the DL channel transmission and/or reception methods according to some implementations of the present disclosure.

FIG. 11 illustrates a DL channel reception flow in a UE according to some implementations of the present disclosure.

The UE may receive a first discontinuous reception (DRX) configuration (S1101). The UE may receive a monitoring window configuration that includes a configuration for one or more common search spaces (CSSs) (S1102). Based on the monitoring window configuration, first physical downlink control channel (PDCCH) monitoring may be performed in a monitoring occasion (MO) within a first PDCCH monitoring window (S1103). Based on detecting first group common downlink control information (GC-DCI) including a DRX command for the first DRX configuration over at least one CSS from among the one or more CSSs within the first PDCCH monitoring window, an active time of a first DRX cycle may be stopped based on the first DRX configuration, and a second DRX cycle based on the first DRX configuration may be started after a predetermined time (S1104).

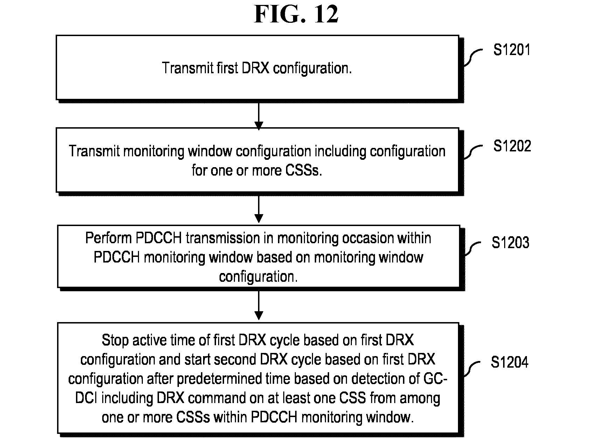

FIG. 12 illustrates a DL channel transmission flow in a BS according to some implementations of the present disclosure.

The BS may transmit a first discontinuous reception (DRX) configuration (S1201). The BS may transmit a monitoring window configuration that includes a configuration for one or more common search spaces (CSSs) (S1202). Based on the monitoring window configuration, first physical downlink control channel (PDCCH) transmission may be performed in a monitoring occasion (MO) within a first PDCCH monitoring window (S1203). Based on detecting first group common downlink control information (GC-DCI) including a DRX command for the first DRX configuration over at least one CSS from among the one or more CSSs within the first PDCCH monitoring window, an active time of a first DRX cycle may be stopped based on the first DRX configuration, and a second DRX cycle based on the first DRX configuration may be started after a predetermined time (S1204).

In some implementations of the present disclosure, the UE and the BS may operate as follows.

### <Implementation 1> Method of simultaneously indicating a DRX command to a plurality of UEs via group common DL control information (GC-DCI) and/or GC-MAC CE instead of indicating the DRX command (e.g., short DRX command and/or long DRX command) via UE-specific MAC control element (CE)

The DRX command may be transmitted more than once (multiple times) considering that the UE may not receive or fail to receive the DRX command.

It is possible to indicate absolute and/or relative time offset information informing how soon application of a DRX cycle mode (e.g., short DRX cycle mode and/or long DRX cycle mode) starts after the DRX command is indicated via MAC CE or DCI. Alternatively, a point in time when a DRX cycle mode is applied may be pre-configured or defined. For example, the point in time when the DRX cycle mode is applied may be defined in standard documents, and the like.

The BS may configure a common search space (CSS) or new type of CSS, in which UEs will receive a group common DRX command. A specific RNTI for monitoring a DRX command for NES may be configured. The specific RNTI may be promised between the BS and the UE in advance. When a monitoring window for a DRX command is configured, the UE may operate to monitor the DRX command during the corresponding window period. The monitoring window for the DRX command may be configured periodically. When no DRX command is detected during the window duration, the UE may either equally apply the most recently received DRX command from among the previously received DRX commands or perform a DRX operation based on a default DRX parameter preconfigured (e.g., via higher layer signaling (e.g., RRC signaling)).

In detail, a UE that receives a C-DRX configuration from a BS may have an active duration and an inactive occasion in which the UE enters a sleep mode for energy saving, and thus the BS may also expect an energy saving effect by using the inactive duration of the UE. For example, energy saving operations may be performed, such as transmitting a DRX command to all UEs in a cell to switch to a sleep mode and having the BS also switch to a sleep mode within the inactive duration of the UEs. In some scenarios, the (short or long) DRX command MAC CE is UE-specifically indicated and therefore may not switch more than one UE configured with C-DRX in the cell to a sleep mode at once. Accordingly, the opportunities for BS to save energy may be reduced or eliminated due to signaling overhead and delay issues that increase a time it takes for each UE to enter sleep mode.

According to some implementations of the present disclosure, one or more UEs configured with C-DRX within a cell may be simultaneously switched to a sleep mode via GC-DCI and/or GC-MAC CE. The UE may not receive or may fail to receive the DRX command transmitted by the BS via GC-DCI and/or GC-MAC CE, and thus the DRX command may be indicated more than once (multiple times) via GC-DCI and/or GC-MAC CE. When the DRX command is indicated via the GC-DCI and/or the GC-MAC CE, the UE may experience an issue of missing the GC-DCI and/or the GC-MAC CE. For example, the UE may fail to detect or decode the GC-DCI and/or the GC-MAC CE. In this case, the BS may expect that the UE switches to an active mode, and the UE may perform operations (e.g., perform PDCCH monitoring in a preset ON duration and keep an inactivity timer running) when the UE does not receive the DRX command, which may cause misalignment between the BS and the UE.

In consideration of this issue, according to some implementations of the present disclosure, the BS may configure a common CSS or new type of CSS, in which UEs will receive a group common DRX command. A specific RNTI for monitoring the DRX command for NES on a specific type of CSS may be configured. The specific RNTI may be promised between the BS and the UE in advance. When a monitoring window for a DRX command is configured, the UE may operate to monitor the DRX command during the corresponding window period. The monitoring window for the DRX command may be configured periodically. The UE may be configured with a monitoring window including a plurality of monitoring occasions (i.e., CSS) during which the UE may expect reception of the GC-DCI and/or the GC-MAC CE, and when the UE receives a DRX command GC-DCI in at least one of the plurality of monitoring occasions, the UE may perform a DRX operation according to the detected DRX command. For example, when there is a DRX command detected during the monitoring window duration, the UE may stop drx-*OnDurationTimer and drx-InactivityTimer* and switch to an OFF duration of a long DRX cycle or a short DRX cycle. When there is a DRX command detected during the corresponding window duration, the UE may perform a DRX operation after a relative or absolute offset value that is pre-configured (e.g., via higher layer signaling (e.g., RRC signaling)). When no DRX command is detected during the window duration, the UE may either equally apply the most recently received DRX command from among the previously received DRX commands or perform a DRX operation based on a default DRX parameter preconfigured (e.g., via higher layer signaling (e.g., RRC signaling)).

Even when the UE receives the DRX command, a time at which a DRX cycle is to be applied may be different for each UE, and thus the DRX command itself indicated by the GC-DCI and/or the GC-MAC CE may indicate a time at which the DRX cycle is to be applied, and thus one or more UEs may start performing a DRX operation simultaneously at a specific time. For example, when instructed via the GC-MAC CE, a time taken for the BS to retransmit the MAC CE when the UE reports NACK for the corresponding instruction, or when instructed via the GC-DCI, a time taken to repeat the DRX command more than once may be considered, and relative and/or absolute time offset information related to a time point at which a (short or long) DRX cycle is applied (also called started or operated) may be indicated via the MAC CE or the DCI. Alternatively, time offset information may be pre-configured (e.g. via RRC signaling) or defined in the standard. For example, the point in time when the DRX cycle mode is applied may be defined in standard documents, and the like. The relative time offset may mean how soon after the GC-DCI and/or GC-MAC CE DRX commands are received a DRX cycle is to be applied (also called started or operated). The absolute time offset may mean, for example, applying (also called started or operated) a DRX cycle after a certain slot (e.g., after 10 slots) from a specific SFN (SFN=0).

### <Implementation 2> C-DRX operation method of UE when NES mode of BS is configured or indicated or when UE receives DRX command (GC-)MAC CE and/or (GC-)DCI for NES

When an NES mode is dynamically turned ON/OFF through a pre-arranged and/or configured pattern, a long DRX cycle may be applied (also called started or operated) during an ON duration of the NES mode when a DRX command is received through (GC-)MAC CE and/or (GC-)DCI even if a short DRX is configured. When receiving a MAC CE other than the GC-MAC CE and/or GC-DCI DRX command for NES, the UE may initiate a short DRX cycle. For example, the UE may have a short DRX cycle configured and may start a short DRX cycle upon receiving/detecting the MAC CE. On the other hand, when the UE receives/detects a PDCCH containing the GC-DCI, the UE may start a long DRX cycle even if a short DRX cycle is configured.

In this case, during a predetermined time period in which the BS performs DTXs by operating in an NES, only a long DRX cycle may be applied during the configured time, or applied N times.

The BS may pre-configure or indicate together with the (GC-)MAC CE and/or the (GC-)DCI how many durations or how many DRX cycles the BS allows the operation. It may also be possible to define a duration or DRX cycle that allows the above operation.

When a long DRX cycle is applied in an ON duration of the NES mode, even if a PDCCH is received, the short DRX cycle may not be immediately applied (also called started or operated), but the long DRX cycle may be applied (also called started or operated) N times and then the short DRX cycle is applied.

In this case, a duration in which the long DRX operation is performed may be N times based on a time at which the PDCCH is received. When another PDCCH is received in the middle of a duration in which N long DRX cycles are applied, N times may be applied based on a time of receiving the most recently received PDCCH, or the previous N times may be maintained. Here, N is a natural number greater than 1.

According to some implementations of the present disclosure, when a PDCCH is received consecutively or N times while applying (also called starting or operating) a long DRX cycle N times, an inactivity timer may be terminated and a short DRX cycle may be applied. Here, N may be promised, configured or indicated in advance.

Three DRX cycles including a short DRX cycle, a long DRX cycle, and a longer DRX cycle than the long DRX cycle may be configured.

In this case, in a non-NES mode, it may be possible to configure and/or indicate to operate in a combination of a short DRX cycle and a long DRX cycle, and when entering an NES mode, to operate in a combination of a short DRX cycle and a longer DRX cycle or a combination of a long DRX cycle and a longer DRX cycle.

It may also be possible to configure a DRX cycle and switching order to be applied first, depending on/regardless of a BS mode or when a DRX command is indicated. In this case, switching means operating in a first DRX cycle and then operating in a second DRX cycle with a different length.

When operating with a longer DRX cycle, if a PDCCH is received during the ON duration(s), the UE may switch to a long DRX cycle, and when a PDCCH is received again, the UE may switch to a short DRX cycle, and when the PDCCH is not found for a certain period of time or a certain number of ON duration(s), the UE may sequentially switch to a long DRX cycle and a longer DRX cycle.

When operating with a longer DRX cycle and receiving a PDCCH in the ON duration(s), the UE may immediately switch to a short DRX cycle, and when no PDCCH is found in a certain period of time or a certain number of ON duration(s), the UE may sequentially switch to a long DRX cycle, or even a longer DRX cycle.

The BS may configure a plurality of DRX cycles with different DRX periods and may apply a DRX cycle or a combination of DRX cycles that are pre-arranged or configured according to an operation mode of the BS. In this case, the DRX period may vary depending on the length of the DRX cycle or the length of the OFF duration that configures the DRX cycle. In other words, a longer DRX period may mean that the length of the DRX cycle is relatively long or mean that the DRX cycle has a longer OFF period. For example, the duration of the first DRX cycle being longer than the duration of the second DRX cycle may mean that the length of the first DRX cycle is longer than the length of the second DRX cycle, or the length of the first DRX cycle and the length of the second DRX cycle are the same, but the OFF duration of the first DRX cycle is configured to be longer than the OFF duration of the second DRX cycle.

For example, three DRX periods (or DRX periods + offsets) 1, 2 and 3 may be configured for a UE, a DRX operation may be performed in a non-NES mode with a combination of short DRX cycles and long DRX cycles based on a combination of DRX periods 1 and 2, and a DRX operation may also be performed in a NES mode with a combination of a short DRX cycle and a long DRX cycle based on a combination of DRX periods 1 and 3 or a combination of DRX periods 2 and 3.

In this case, the size of a DRX period value may be configured to be DRX period 1 < DRX period 2 < DRX period 3. Alternatively, the size of the DRX period value may also be configured to be DRX period 1 < DRX period 3 < DRX period 2. In this case, which combination of DRX periods 1 and 3 and DRX 2 and 3 to apply in an NES mode may be pre-configured (e.g., via higher layer signaling (e.g., RRC signaling)) or dynamically indicated (e.g., via L1 signaling (e.g., DCI)).

As another example, four DRX periods (or DRX periods + offsets) 1, 2, 3, and 4 may be configured for a UE, a DRX operation may be performed in a non-NES mode with a combination of short DRX cycles and long DRX cycles based on a combination of DRX periods 1 and 2, and a DRX operation may also be performed in a NES mode with a combination of a short DRX cycle and a long DRX cycle based on a combination of DRX periods X and Y. X and Y are either 1, 2, 3, or 4.

In this case, the size of a DRX period value may be configured to be DRX period 1 < DRX period 2 < DRX period 3 < CRX period 4. Alternatively, the size of a DRX period value may be configured to be DRX period 1 < DRX period 3 < DRX period 2 < DRX period 4. Alternatively, the size of a DRX period value may be configured to be DRX period 1 < DRX period 3 < DRX period 4 < DRX period 2. In this case, a combination of DRX periods X and Y in the NES mode is determined as a combination of DRX periods 3 and 4, or X and Y may be pre-configured (e.g. via higher layer signaling (e.g. RRC signaling)) or dynamically indicated (e.g. via L1 signaling (e.g. DCI) or MAC CE) to be any one of 1, 2, 3, and 4.

In detail, the BS may pre-configure and/or instruct the UE (e.g., via higher layer signaling (e.g., RRC signaling)) to a DRX pattern of not transmitting and/or receiving for a certain time period to save energy. In the case of a semi-static DTX pattern of the BS, a delay problem may occur because even if there is data to be transmitted and/or received by the UE, the BS needs to wait until a time when transmission and/or reception are possible according to a promised DTX pattern. According to some implementations of the present disclosure, to minimize data transmission and/or reception delay problems of the UE, a plurality of ON/OFF duration pattern candidates may be configured, and a dynamic DTX pattern for an NES, which dynamically indicates a specific DTX pattern, (via L1 signaling or MAC CE) may be proposed. Accordingly, data transmission and/or reception delay time may be minimized and energy saving effects may be increased. As described above, in consideration of the C-DRX operation of the UE, energy saving effects may be expected by maximally utilizing the time duration when the UE is in a sleep state as the DTX duration of the BS. However, there may be more than one connected mode UE in a cell, and each UE may have different active time or inactive time according to a DRX cycle, and thus in the case of a short DRX cycle, a time duration that the BS is capable of obtaining through DTX may be very short or non-existent, and an energy saving effect may not be significant. According to some implementations of the present disclosure, when the BS configures and/or instructs the UE to an NES mode, or when the UE receives a long DRX command MAC CE and/or GC-DCI for the NES, an energy saving time of the BS may be ensured by ensuring a relatively long inactivity time of the UE even if a short DRX cycle is configured.

According to some implementations of the present disclosure, in the NES mode ON duration of the BS, when a DRX command is received via the (GC-)MAC CE and/or the (GC-)DCI, the long DRX cycle may always be applied even if both short DRX and long DRX are configured to the UE. It may be possible to consider applying a short DRX cycle only for a certain period of time, for example, during a time duration when the BS operates in an NES mode and DTXs, or applying a long DRX cycle only for a certain period of time or N times. However, the BS may indicate or pre-configure/define together with the (GC-)MAC CE and/or the (GC-)DCI how many durations or how many DRX cycles the operation is to be allowed for.

In some scenarios, when the UE is configured with a short DRX cycle, and then receives a PDCCH in the ON duration(s) while the UE operates with a long DRX cycle, the UE applies the short DRX cycle for the configured number of times after the scheduled transmit/receive operation, and switches to the long DRX cycle when the UE does not receive a PDCCH in the ON duration(s) of the short DRX cycle(s). However, when the BS operates in an NES mode to save energy, even if the UE receives a PDCCH during a long DRX cycle, the short DRX cycle is not applied (also called started or operated) immediately when the next DRX cycle is applied, and instead, the long DRX cycle is applied N times, and then the short DRX cycle is applied first after PDCCH reception, similar to the existing C-DRX operation, and the long DRX cycle may be applied when there is no PDCCH reception. In this case, N may be a natural number greater than 1, and a duration in which a long DRX is maintained may be N times based on a PDCCH reception time, and when another PDCCH is received during a duration to which N times are applied, N times may be applied based on the most recently received PDCCH reception time or the previous N times may be maintained.

In some scenarios, when a short DRX cycle is configured, the reason why the UE applies (also called starts or operates) the short DRX cycle first when receiving a PDCCH during the ON duration(s) of a C-DRX operation is to take into account a transmission and/or reception delay time because additional data transmission and/or reception is likely to occur within a short time from a time of receiving the corresponding PDCCH. To maximize an energy saving effect of the BS, even if a short DRX cycle is configured, in a method according to some implementations of the present disclosure, in which case a long DRX cycle is applied (also called start or operation), when data to be transmitted to the UE and/or data to be received by the UE frequently occurs, it may be necessary to fallback to a short DRX cycle like the existing C-DRX operation rather than applying a long DRX cycle even in the NES mode. Accordingly, in a method according to some implementations of the present disclosure, when the UE receives a PDCCH consecutively or N times while applying a long DRX cycle, an inactivity timer may be terminated and a short DRX cycle may be applied. In this case, N may be promised, configured, and/or instructed in advance.

The longest long DRX cycle length to be configured currently (*drx-LongCycleStartOffset*) may be 10.24 seconds, which allows the UE to configure a longer DRX cycle with a longer length than the long DRX cycle configured for NES in addition to the short DRX cycle (*drx-ShortCycle*) and the long DRX cycle with the existing DRX configuration (e.g., *drx-Config* as an RRC configuration used to configure DRX-related parameter(s)). The length of the longer DRX cycle may have a maximum value equal to the length of the long DRX cycle described above. The length of the longer DRX cycle may be 1.5 or 2 times the maximum length of the existing long DRX cycle.

When the BS configures and/or instructs the NES mode, to maximize an energy saving effect, if a longer DRX cycle is configured in addition to the short DRX cycle and the long DRX cycle, that is, if three DRX cycles, a short DRX cycle, a long DRX cycle, and a longer DRX cycle, are pre-configured, the BS may configure and/or instruct UE(s) to operate in a combination of the short DRX cycle and the long DRX cycle in the non-NES mode, and then operate in a combination of the short DRX cycle and the longer DRX cycle or the long DRX cycle and the longer DRX cycle when entering the NES mode. When all three DRX cycles are configured, the short DRX cycle, the long DRX cycle, and the longer DRX cycle, a specific DRX cycle to always be applied first may also be configured, depending on/regardless of a BS mode (NES mode, ON duration, or OFF duration) or when a DRX command is indicated.

When a short DRX cycle is configured, if a switching procedure between long DRX cycles, i.e. when there is data activity such as PDCCH reception during the ON duration(s) of the long DRX cycle when the short DRX cycle is configured, then when a next DRX cycle is applied (also called started or operated), the short DRX cycle, not the long DRX cycle, is applied during a configured short DRX cycle timer (*drx-ShortCycleTimer*). If there is no data activity such as PDCCH reception during the ON duration(s) within the corresponding time duration, an operation may be performed with a longer DRX cycle, if a PDCCH is received during the ON duration(s), switching to the long DRX cycle is performed and if a PDCCH is received again, switching to the short DRX cycle is performed, and if the PDCCH is not found during the ON duration (s) for a certain period of time or a certain number of times (e.g., *drx-ShortCycleTimer*), switching may be sequentially performed to the long DRX cycle and then to the longer DRX cycle.

Alternatively, if a PDCCH is received during ON duration(s) while operating in a longer DRX cycle, switching to a short DRX cycle may be performed when applying a next DRX cycle (also called start or operation), and if no PDCCH is found during a certain duration of time or a certain number of ON duration(s), switching to a long DRX cycle and then to a longer DRX cycle may be sequentially performed. That is, when there is data activity such as PDCCH reception during the ON duration(s) within a longer DRX cycle, then when a next DRX cycle is applied (also called started or operated), a short DRX cycle is applied for a preset value or time duration (e.g., *drx-ShortCycleTimer*), and if there is no data activity such as PDCCH reception during the ON duration(s) within the short DRX cycle, switching to a long DRX cycle is performed and applied for a preset value or time duration (e.g., *drx-LongCycleTimer*).

The BS may configure one or more DRX cycles with different DRX periods, in which case a combination of DRX cycles or DRX c-cycles that are promised and/or configured in advance may be applied depending on an operation mode of the BS. For example, three DRX periods (or DRX periods + offsets) 1, 2 and/or 3 may be configured for a UE, a DRX operation may be performed in a non-NES mode with a combination of short DRX cycle and long DRX cycle based on a combination of DRX periods 1 and 2, and a DRX operation may also be performed in a NES mode with a combination of a short DRX cycle and a long DRX cycle based on a combination of DRX periods 1 and 3 or a combination of DRX periods 2 and 3. Here, based on a combination of DRX periods 1 and 2, it may mean that only DRX periods 1 and 2 from among the configured different one or more DRX cycles are used in a specific operation mode of the BS (e.g., NES mode). Here, based on a combination of DRX periods 2 and 3, this may mean that the BS uses only DRX periods 2 and 3 from among the different one or more DRX cycles configured when operating in an NES mode.

In this case, the size of a DRX period value may be configured to be DRX period 1 < DRX period 2 < DRX period 3. The size of a DRX period value may be configured to be DRX period 1 < DRX period 3 < DRX period 2. In this case, which combination of DRX periods 1 and 3 and DRX 2 and 3 to apply in an NES mode may be pre-configured (e.g., via higher layer signaling (e.g., RRC signaling)) or dynamically indicated (via L1 signaling, the MAC CE, or the like).

As another example, four DRX periods (or DRX periods + offsets) 1, 2, 3, and/or 4 may be configured for a UE, a DRX operation may be performed in a non-NES mode with a combination of short DRX cycle and long DRX cycle based on a combination of DRX periods 1 and 2, and a DRX operation may also be performed in a NES mode with a combination of a short DRX cycle and a long DRX cycle based on a combination of DRX periods X and Y. In this case, the size of a DRX period value may be configured to be DRX period 1 < DRX period 2 < DRX period 3 < CRX period 4. The size of the DRX period value may be configured to be DRX period 1 < DRX period 3 < DRX period 2 < DRX period 4 or DRX period 1 < DRX period 3 < DRX period 4 < DRX period 2. In this case, a combination of DRX periods X and Y in the NES mode may be determined by a combination of DRX periods 3 and 4. X and Y are either 1, 2, 3, or 4. Values of X and Y from among 1, 2, 3 and 4 may be preconfigured (e.g. via higher layer signaling (e.g. RRC signaling)) or dynamically indicated (e.g. via L1 signaling or MAC CE).

In the present disclosure, the NES mode may mean a cell-specific DTX/DRX pattern obtained by periodically repeating a duration in which a BS performs minimal or no transmission/reception (OFF) during a pre-promised and/or pre-configured (e.g., defined in a standard document) and a time duration in which a normal operation is performed, an active/inactive pattern, or a DRX configuration (e.g., cell-specific DRX configuration) for NES by which a DRX cycle is configured with an active time and an inactive time, for energy saving of the BS. In detail, as an example of DRX configuration for NES, the UE may not perform PDCCH monitoring even during the active time within a DRX cycle and may omit reception of common channel(s) and/or signal(s) such as SSB/SIB1 or may receive the common channel(s) and/or the signal(s) only in a very long cycle during a time duration outside the active time. The UE and/or the BS may not perform transmission/reception on resources of channel(s) and/or signal(s), such as PDCCH/PDSCH/CSI-RS/PRS/PUCCH/PUSCH/SRS, even if the channel(s) and/or signal(s) are configured to be repeatedly transmitted/received outside of the active time. When cell-specific DTX/DRX is configured or applied, a NES mode/state may be defined, and when the NES mode/state is configured and/or indicated, the UE and/or the BS may be pre-configured to turn OFF transmission and/or reception of some or all DL/UL channel(s) and/or signal(s), reduce the amount of frequency resources to transmit and/or receive, reduce the number of antenna ports used for transmission, or lower the transmission power to save energy during a specific time duration while operating in the NES mode. A BWP for NES may mean a specific BWP that is switched when the NES mode is turned ON, and this BWP may mean a BWP that includes only a very small number of RBs, i.e., BW, which is the amount of frequency resources from among the BWPs configured to the UE. If the BS operates in non-NES mode, i.e., instructs and/or configures OFF of the NES mode to the UEs in the cell, the BS may transmit/receive DL/UL channel(s) and/or signal(s) in the same manner as in a general BS operation. The DRX configuration for NES may be the same as the C-DRX/I-DRX of the existing UE, or may mean that the time-domain ON/OFF pattern of (multiple) DL/UL channel(s) and/or signal(s) promised is dynamically indicated via L1 (e.g., GC-DCI)/L2 (e.g., GC-MAC CE) signaling or the like.

The UE may perform operations according to some implementations of the present disclosure in association with DL signal receptions. The UE may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

In the UE, the processing device, the computer readable (non-transitory) storage medium, and/or the computer program product, the operations may include receiving a first discontinuous reception (DRX) configuration, receiving a monitoring window for one or more common search spaces (CSSs), performing first PDCCH monitoring in a monitoring occasion (MO) within a first physical downlink control channel (PDCCH) monitoring window based on the monitoring window configuration, stopping an active time of a first DRX cycle based on the first DRX configuration based on detection of a first group common downlink control information (GC-DCI) including a DRX command for the first DRX configuration on at least one CSS from among the one or more CSSs within the first PDCCH monitoring window, and starting a second DRX cycle based on the first DRX configuration after a predetermined time.

In some implementations of the present disclosure, the operations may include performing second PDCCH monitoring in an MO within a second PDCCH monitoring window based on the monitoring window configuration, stopping an active time of the second DRX cycle based on detection of a second GC-DCI including a DRX command for the first DRX configuration on the one or more CSSs within the second PDCCH monitoring window, and continuing to apply the second DRX cycle based on not detecting the second GC-DCI including a DRX command for the first DRX configuration on the one or more CSSs within the second PDCCH monitoring window.

In some implementations of the present disclosure, the operations may include performing second PDCCH monitoring in an MO within a second PDCCH monitoring window based on the monitoring window configuration, stopping an active time of the second DRX cycle based on detection of a second GC-DCI including a DRX command for a first DRX configuration on the one or more CSSs within the second PDCCH monitoring window, and starting a predetermined default DRX cycle based on not detecting the second GC-DCI including a DRX command for the first DRX configuration on the one or more CSSs within the second PDCCH monitoring window.

In some implementations of the present disclosure, the first GC-DCI may include information about a predetermined time.

Some implementations of the present disclosure may further include receiving a higher layer signal including information about a redetermined time.

In some implementations of the present disclosure, the first GC-DCI may be detected based on a radio network temporary identity (RNTI) for the DRX command.

In some implementations of the present disclosure the first DRX configuration may further include a configuration for a short DRX cycle, and the second DRX cycle may be a long DRX cycle.

In some implementations of the present disclosure, based on the first DRX configuration further including a configuration for a short DRX cycle, the operations may include receiving a PDCCH during an active time of the second DRX cycle, and starting the short DRX cycle after applying the second DRX cycle N times after receiving the PDCCH, and in this case, N may be a predetermined natural number greater than 1.

In some implementations of the present disclosure, the operation may include starting the short DRX cycle based on receiving the PDCCH M times during applying the second DRX cycle N times, and in this case, M may be a predetermined natural number greater than 1.

In some implementations of the present disclosure, the method may include receiving a second DRX configuration including information about a second DRX period different from a first DRX period according to the first DRX configuration, and in this case, the second DRX cycle may be formed by a combination of the first DRX period and the second DRX period.

The BS may perform operations according to some implementations of the present disclosure in association with DL signal transmissions. The BS may include at least one transceiver; at least one processor; and at least one computer memory operably connectable to the at least one processor and storing instructions that, when executed, cause the at least one processor to perform operations according to some implementations of the present disclosure. A processing device for a BS may include at least one processor; and at least one computer memory operably connectable to the at least one processor and storing instructions that, when executed, cause the at least one processor to perform operations according to some implementations of the present disclosure. A computer readable (non-transitory) storage medium may store at least one computer program including instructions that, when executed by at least one processor, cause the at least one processor to perform operations according to some implementations of the present disclosure. A computer program or a computer program product may include instructions recorded in at least one computer readable (non-transitory) storage medium and causing, when executed, (at least one processor) to perform operations according to some implementations of the present disclosure.

In the BS, the processing device, the computer readable (nonvolatile) storage medium, and/or the computer program product, the operations may include transmitting a first discontinuous reception (DRX) configuration, transmitting a monitoring window for one or more common search spaces (CSSs), performing first PDCCH transmission in a monitoring occasion (MO) within a first physical downlink control channel (PDCCH) monitoring window based on the monitoring window configuration, stopping an active time of a first DRX cycle based on the first DRX configuration based on detection of a first group common downlink control information (GC-DCI) including a DRX command for the first DRX configuration on at least one CSS from among the one or more CSSs within the first PDCCH monitoring window, and starting a second DRX cycle based on the first DRX configuration after a predetermined time.

In some implementations of the present disclosure, the operations may include performing second PDCCH transmission in an MO within a second PDCCH monitoring window based on the monitoring window configuration, stopping an active time of the second DRX cycle based on detection of a second GC-DCI including a DRX command for a first DRX configuration on the one or more CSSs within the second PDCCH monitoring window, and continuously applying the second DRX cycle based on not detecting the second GC-DCI including a DRX command for the first DRX configuration on the one or more CSSs within the second PDCCH monitoring window.

In some implementations of the present disclosure, the operations may include performing second PDCCH transmission in an MO within a second PDCCH monitoring window based on the monitoring window configuration, stopping an active time of the second DRX cycle based on detection of a second GC-DCI including a DRX command for a first DRX configuration on the one or more CSSs within the second PDCCH monitoring window, and starting a predetermined default DRX cycle based on not detecting the second GC-DCI including a DRX command for the first DRX configuration on the one or more CSSs within the second PDCCH monitoring window.

In some implementations of the present disclosure, the first GC-DCI may include information about a predetermined time.

Some implementations of the present disclosure may further include transmitting a higher layer signal including information about a redetermined time.

In some implementations of the present disclosure, the first GC-DCI may be detected based on a radio network temporary identity (RNTI) for the DRX command.

In some implementations of the present disclosure the first DRX configuration may further include a configuration for a short DRX cycle, and the second DRX cycle may be a long DRX cycle.

In some implementations of the present disclosure, based on the first DRX configuration further including a configuration for a short DRX cycle, the operations may include transmitting a PDCCH during an active time of the second DRX cycle, and starting the short DRX cycle after applying the second DRX cycle N times after receiving the PDCCH, and in this case, N may be a predetermined natural number greater than 1.

In some implementations of the present disclosure, the operation may include starting the short DRX cycle based on transmitting the PDCCH M times during applying the second DRX cycle N times, and in this case, M may be a predetermined natural number greater than 1.

In some implementations of the present disclosure, the method may include transmitting a second DRX configuration including information about a second DRX period different from a first DRX period according to the first DRX configuration, and in this case, the second DRX cycle may be formed by a combination of the first DRX period and the second DRX period.

The examples of the present disclosure as described above have been presented to enable any person of ordinary skill in the art to implement and practice the present disclosure. Although the present disclosure has been described with reference to the examples, those skilled in the art may make various modifications and variations in the example of the present disclosure. Thus, the present disclosure is not intended to be limited to the examples set for the herein, but is to be accorded the broadest scope consistent with the principles and features disclosed herein.

### Industrial Availability

The implementations of the present disclosure may be used in a BS, a UE, or other equipment in a wireless communication system.

## Claims

1. A method of receiving a downlink (DL) channel by a user equipment (UE) in a wireless communication system, the method comprising:
receiving a first discontinuous reception (DRX) configuration;
receiving a monitoring window configuration including a configuration for one or more common search spaces (CSSs);
based on the monitoring window configuration, performing first physical downlink control channel (PDCCH) monitoring in a monitoring occasion (MO) within a first PDCCH monitoring window;
based on detection of first group common downlink control information (GC-DCI) including a DRX command for the first DRX configuration on at least one CSS from among the one or more CSSs within the first PDCCH monitoring window:
stopping an active time of a first cycle based on the first DRX configuration; and
starting a second DRX cycle based on the first DRX configuration after a predetermined time.

2. The method of claim 1, further comprising:
performing second PDCCH monitoring in an MO within a second PDCCH monitoring window based on the monitoring window configuration;
stopping an active time of the second DRX cycle based on detection of a second GC-DCI including a DRX command for the first DRX configuration on the one or more CSSs within the second PDCCH monitoring window; and
continuing to apply the second DRX cycle based on not detecting the second GC-DCI including a DRX command for the first DRX configuration on the one or more CSSs within the second PDCCH monitoring window.

3. The method of claim 1, further comprising:
performing second PDCCH monitoring in an MO within a second PDCCH monitoring window based on the monitoring window configuration;
stopping an active time of the second DRX cycle based on detection of a second GC-DCI including a DRX command for the first DRX configuration on the one or more CSSs within the second PDCCH monitoring window; and
starting a predetermined default DRX cycle based on not detecting the second GC-DCI including a DRX command for the first DRX configuration on the one or more CSSs within the second PDCCH monitoring window.

4. The method of claim 1, wherein the first GC-DCI includes information regarding the predetermined time.

5. The method of claim 1, further comprising receiving a higher layer signal including information regarding the predetermined time.

6. The method of claim 1, wherein the first GC-DCI is detected based on a radio network temporary identity (RNTI) for the DRX command.

7. The method of claim 1, wherein the first DRX configuration further includes a configuration for a short DRX cycle, and
the second DRX cycle is a long DRX cycle.

8. The method of claim 1, further comprising:
based on the first DRX configuration further including a configuration for a short DRX cycle, receiving a PDCCH during an active time of the second DRX cycle; and
after the receiving of the PDCCH, applying the second DRX cycle N times and then starting the short DRX cycle, N being a predetermined natural number greater than 1.

9. The method of claim 8, further comprising, based on the receiving of the PDCCH M times while the second DRX cycle is applied N times, starting the short DRX cycle, M being a predetermined natural number greater than 1.

10. The method of claim 1, further comprising receiving a second DRX configuration including information regarding a second DRX period different from a first DRX period according to the first DRX configuration,
wherein the second DRX cycle is formed by a combination of the first DRX period and the second DRX period.

11. A user equipment (UE) for receiving a downlink (DL) channel in a wireless communication system, the UE comprising:
at least one transceiver;
at least one processor; and
at least one computer memory operably connected to the at least one processor and storing instructions that, when executed, cause the at least one processor to perform operations including:
receiving a first discontinuous reception (DRX) configuration;
receiving a monitoring window configuration including a configuration for one or more common search spaces (CSSs);
based on the monitoring window configuration, performing first physical downlink control channel (PDCCH) monitoring in a monitoring occasion (MO) within a first PDCCH monitoring window;
based on detection of first group common downlink control information (GC-DCI) including a DRX command for the first DRX configuration on at least one CSS from among the one or more CSSs within the first PDCCH monitoring window, stopping an active time of a first cycle based on the first DRX configuration; and
starting a second DRX cycle based on the first DRX configuration after a predetermined time.

12. A processing device in a wireless communication system, the processing device comprising:
at least one transceiver;
at least one processor; and
at least one computer memory operably connected to the at least one processor and storing instructions that, when executed, cause the at least one processor to perform operations including:
receiving a first discontinuous reception (DRX) configuration;
receiving a monitoring window configuration including a configuration for one or more common search spaces (CSSs);
based on the monitoring window configuration, performing first physical downlink control channel (PDCCH) monitoring in a monitoring occasion (MO) within a first PDCCH monitoring window;
based on detection of first group common downlink control information (GC-DCI) including a DRX command for the first DRX configuration on at least one CSS from among the one or more CSSs within the first PDCCH monitoring window, stopping an active time of a first cycle based on the first DRX configuration; and
starting a second DRX cycle based on the first DRX configuration after a predetermined time.

13. A computer-readable storage non-transitory medium storing at least one computer program including instructions that, when executed by at least one processor, cause the at least one processor to perform operations for a user equipment (UE), the operations comprising:
receiving a first discontinuous reception (DRX) configuration;
receiving a monitoring window configuration including a configuration for one or more common search spaces (CSSs);
based on the monitoring window configuration, performing first physical downlink control channel (PDCCH) monitoring in a monitoring occasion (MO) within a first PDCCH monitoring window;
based on detection of first group common downlink control information (GC-DCI) including a DRX command for the first DRX configuration on at least one CSS from among the one or more CSSs within the first PDCCH monitoring window, stopping an active time of a first cycle based on the first DRX configuration; and
starting a second DRX cycle based on the first DRX configuration after a predetermined time.

14. A computer program stored in a computer-readable storage medium, the computer program including at least one program code including instructions that, when executed, cause at least one processor to perform operations comprising:
receiving a first discontinuous reception (DRX) configuration;
receiving a monitoring window configuration including a configuration for one or more common search spaces (CSSs);
based on the monitoring window configuration, performing first physical downlink control channel (PDCCH) monitoring in a monitoring occasion (MO) within a first PDCCH monitoring window;
based on detection of first group common downlink control information (GC-DCI) including a DRX command for the first DRX configuration on at least one CSS from among the one or more CSSs within the first PDCCH monitoring window, stopping an active time of a first cycle based on the first DRX configuration; and
starting a second DRX cycle based on the first DRX configuration after a predetermined time.

15. A method of transmitting a downlink (DL) channel to a user equipment (UE) by a base station (BS) in a wireless communication system, the method comprising:
transmitting a first discontinuous reception (DRX) configuration;
transmitting a monitoring window configuration including a configuration for one or more common search spaces (CSSs);
based on the monitoring window configuration, performing first physical downlink control channel (PDCCH) transmission in a monitoring occasion (MO) within a first PDCCH monitoring window;
based on detection of first group common downlink control information (GC-DCI) including a DRX command for the first DRX configuration on at least one CSS from among the one or more CSSs within the first PDCCH monitoring window, stopping an active time of a first cycle based on the first DRX configuration; and
starting a second DRX cycle based on the first DRX configuration after a predetermined time.

16. A base station (BS) for transmitting a downlink (DL) channel to a user equipment (UE) in a wireless communication system, the BS comprising:
at least one transceiver;
at least one processor; and
at least one computer memory operably connected to the at least one processor and storing instructions that, when executed, cause the at least one processor to perform operations including:
transmitting a first discontinuous reception (DRX) configuration;
transmitting a monitoring window configuration including a configuration for one or more common search spaces (CSSs);
based on the monitoring window configuration, performing first physical downlink control channel (PDCCH) transmission in a monitoring occasion (MO) within a first PDCCH monitoring window;
based on detection of first group common downlink control information (GC-DCI) including a DRX command for the first DRX configuration on at least one CSS from among the one or more CSSs within the first PDCCH monitoring window, stopping an active time of a first cycle based on the first DRX configuration; and
starting a second DRX cycle based on the first DRX configuration after a predetermined time.
